# EUROPEAN PATENT APPLICATION

(11) **EP 4 224 934 A1**
(43) Date of publication of application: **09.08.2023**
(21) Application number: 20961216.7
(22) Date of filing: 13.11.2020
(51) Int. Cl.: H04W 36/08

(54) **METHOD AND APPARATUS FOR BEAM SWITCHING**

(71) Applicant: Huawei Technologies Co., Ltd., Shenzhen, Guangdong 518129 (CN)
(72) Inventor: FAN, Bo, Shenzhen, Guangdong 518129 (CN); ZHANG, Xi, Shenzhen, Guangdong 518129 (CN); GUAN, Peng, Shenzhen, Guangdong 518129 (CN); LUO, Xiaoyu, Shenzhen, Guangdong 518129 (CN)
(74) Representative: Huawei European IPR
(86) International application number: PCT/CN2020/128858
(87) International publication number: WO 2022/099660

(57) **Abstract**

This application discloses a beam switching method and an apparatus, to resolve a problem of transmission performance loss during beam switching. A terminal device receives first indication information from a network device, where the first indication information indicates a first beam. Then, the terminal device performs one or more of the following behaviors based on the first beam: measuring downlink time-frequency offset information and path loss information corresponding to the first beam, sending, based on the first beam, a signal for uplink timing measurement, and receiving uplink timing adjustment information from the network device, where the timing adjustment information is determined based on the first beam. Further, the terminal device receives second indication information from the network device, where the second indication information indicates to switch to the first beam. The terminal first measures timing information and/or the path loss information of the first beam to be switched to. In this way, when receiving the second indication information for beam switching, the terminal device has performed a process of measuring the timing information and/or the path loss information of the first beam or has performed a part of the process, to switch to the first beam in time.

## Description

### TECHNICAL FIELD

This application relates to the field of wireless communication technologies, and in particular, to a beam switching method and an apparatus.

### BACKGROUND

A network device and a terminal device communicate with each other over beams. The network device and the terminal device may determine an optimal beam pair (including a transmit beam and a receive beam) for uplink and downlink transmission between the network device and the terminal device, to improve communication performance. As the terminal device moves or for another reason, the transmit beam and the receive beam in the optimal beam pair may change. In this case, the transmit beam for uplink and downlink transmission may be switched (where "switch" may also be referred to as "update") through signaling interaction between the network device and the terminal device. The terminal device needs to first measure information such as timing and path loss of a beam to be switched to (where the beam to be switched to may also be referred to as an updated beam or a beam to be updated to), and then performs beam switching. Because it takes a long time to measure the timing and the path loss, the beam to be switched to cannot be used for uplink and downlink transmission in time, causing transmission performance loss.

### SUMMARY

This application provides a beam switching method and an apparatus, to resolve a problem of transmission performance loss during beam switching.

According to a first aspect, a beam switching method is provided, and is applied to a terminal device or a chip in the terminal device. First, first indication information is received from a network device, where the first indication information indicates a first beam. Then, one or more of the following behaviors are performed based on the first beam: measuring downlink time offset information corresponding to the first beam, measuring downlink frequency offset information corresponding to the first beam, measuring path loss information corresponding to the first beam, sending, based on the first beam, a signal for uplink timing measurement, and receiving uplink timing adjustment information from the network device, where the timing adjustment information is determined based on the first beam. Further, second indication information is received from the network device, where the second indication information indicates to switch to the first beam. Optionally, beam switching is performed based on the first beam.

In the first aspect, before sending, to the terminal device, the second indication information for beam switching, the network device first notifies the terminal device of the first beam to be switched to. In this case, the terminal device may first measure timing information and/or the path loss information of the first beam to be switched to. Further, when receiving the second indication information for beam switching, the terminal device has performed a process of measuring the timing information and/or the path loss information of the first beam or has performed a part of the process of measuring the timing information and/or the path loss information of the first beam. In this way, a delay generated because the terminal device needs to first measure information such as timing and path loss of the first beam to be switched to when switching to the first beam can be reduced or avoided, to avoid transmission performance loss.

In a possible implementation, the downlink time offset information and/or the downlink frequency offset information corresponding to the first beam are/is measured based on one or more first resources. The first resource and the first beam satisfy a quasi-colocation relationship of typeD, or the first measured resource and a quasi-colocation resource of typeD corresponding to the first beam satisfy a quasi-colocation relationship of typeD. The one or more first resources are configured by the network device or specified in a protocol. For example, information about the one or more first resources is received from the network device, and the first resource is for measuring the downlink time offset information and/or the downlink frequency offset information corresponding to the first beam.

In a possible implementation, the first resource is a quasi-colocation resource of typeA, typeB, or typeC corresponding to the first beam.

In a possible implementation, the path loss information corresponding to the first beam is measured based on one or more second resources. The second resource and the first beam satisfy the quasi-colocation relationship of typeD, or the second resource and the quasi-colocation resource of typeD corresponding to the first beam satisfy the quasi-colocation relationship of typeD. The one or more second resources are configured by the network device or specified in the protocol. For example, information about the one or more second resources is received from the network device, and the second resource is for measuring the path loss information corresponding to the first beam.

In a possible implementation, the second resource is a quasi-colocation resource of typeA, typeB, or typeC corresponding to the first beam.

In a possible implementation, the second resource is included in the first resource. In other words, the second resource reuses the first resource. For example, the second resource is a part or all of the first resource. For example, the second resource is one of a plurality of first resources. For example, the second resource is a plurality of resources in a plurality of first resources. The first resource reuses the second resource, to improve resource utilization.

In a possible implementation, when the path loss information corresponding to the first beam is measured based on a plurality of second resources, the path loss information corresponding to the first beam may be first measured based on each second resource, to obtain a plurality of corresponding path loss information measurement results. Then, an average value of the plurality of corresponding path loss information measurement results may be determined, and the average value is used as a finally obtained path loss information measurement result of the first beam. Alternatively, filtering processing (where the filtering processing may be understood as weighted averaging) is performed on the plurality of path loss information measurement results, and a path loss information measurement result obtained through the filtering processing is used as a finally obtained path loss information measurement result of the first beam. Calculating the average value and performing filtering processing can reduce measurement fluctuation.

In a possible implementation, the first indication information is further for activating the first resource and/or the second resource. In this way, there is no need to separately send activation instructions to activate the first resource and/or the second resource, so that signaling overheads can be reduced.

In a possible implementation, the sending, based on the first beam, a signal for uplink timing measurement may be sending, over the first beam, the signal for uplink timing measurement. This implementation is applicable to a case in which the first beam is a transmit beam on the terminal device side. Alternatively, the signal for uplink timing measurement may be sent over a receive beam of the first beam (where the receive beam of the first beam may be understood as a transmit beam in a same direction as the receive beam of the first beam). This implementation is applicable to a case in which the first beam is a transmit beam on the network device side.

In a possible implementation, the performing the one or more behaviors in the first aspect based on the first beam may be performing the one or more behaviors in the first aspect based on the first beam at a first moment. The first moment may be a moment (or a slot or symbol in which the moment is located) at which the first indication information is received, a moment (or a slot or symbol in which the moment is located) at which acknowledgement ACK information corresponding to the first indication information is fed back, a moment that equals the moment (or the slot or symbol in which the moment is located) at which the first indication information is received plus a time interval, or a moment that equals the moment (or the slot or symbol in which the moment is located) at which the ACK information corresponding to the first indication information is fed back plus a time interval. In this possible implementation, the moment may be replaced with a time unit, and the time unit may be at a slot level or a symbol level.

In a possible implementation, second duration is greater than or equal to first duration, the second duration is duration of an interval between a moment (or a slot or symbol) at which the second indication information is received and the moment (or the slot or symbol) at which the first indication information is received, and the first duration is for completing performing the one or more behaviors in the first aspect. Optionally, the first duration is greater than or equal to duration required for completing performing the one or more behaviors in the first aspect. In this way, it can be ensured that when the network device sends the second indication information to the terminal device, the terminal device has measured the first beam, so that the terminal device can quickly and directly switch to the first beam, to improve beam switching efficiency and improve transmission performance.

In a possible implementation, whether the terminal device supports a capability of measuring a beam to be switched to before the beam switching may be further reported to the network device in advance. In this way, the network device sends the first indication information to the terminal device in a targeted manner, to avoid a problem that after sending the first indication information, the terminal device does not have the capability of measuring the beam to be switched to before the beam switching, causing a waste of signaling overheads.

According to a second aspect, a beam switching method is provided, and is applied to a network device or a chip in the network device. First, first indication information is sent to a terminal device, where the first beam information indicates a first beam, and the first indication information indicates the terminal device to perform one or more of the following behaviors based on the first beam: measuring downlink time offset information corresponding to the first beam, measuring downlink frequency offset information corresponding to the first beam, measuring path loss information corresponding to the first beam, sending, based on the first beam, a signal for uplink timing measurement, and receiving uplink timing adjustment information from the network device. The uplink timing adjustment information is determined based on the first beam. Then, second indication information is sent to the terminal device, where the second indication information indicates to switch to the first beam. Optionally, beam switching is performed based on the first beam.

In the second aspect, before sending, to the terminal device, the second indication information for beam switching, the network device first notifies the terminal device of the first beam to be switched to. In this case, the terminal device may first measure timing information and/or the path loss information of the first beam to be switched to. Further, when receiving the second indication information for beam switching, the terminal device has performed a process of measuring the timing information and/or the path loss information of the first beam or has performed a part of the process of measuring the timing information and/or the path loss information of the first beam. In this way, a delay generated because the terminal device needs to first measure information such as timing and path loss of the first beam to be switched to when switching to the first beam can be reduced or avoided, to avoid transmission performance loss.

In a possible implementation, information about one or more first resources is sent to the terminal device, where the first resource is for measuring the downlink time offset information and/or the downlink frequency offset information corresponding to the first beam; and the first resource and the first beam satisfy a quasi-colocation relationship of typeD, or the first resource and a quasi-colocation resource of typeD corresponding to the first beam satisfy a quasi-colocation relationship of typeD.

In a possible implementation, the first resource is a quasi-colocation resource of typeA, typeB, or typeC corresponding to the first beam.

In a possible implementation, information about one or more second resources is sent to the terminal device, where the second resource is for measuring the path loss information corresponding to the first beam; and the second resource and the first beam satisfy the quasi-colocation relationship of typeD, or the second resource and the quasi-colocation resource of typeD corresponding to the first beam satisfy the quasi-colocation relationship of typeD.

In a possible implementation, the second resource is a quasi-colocation resource of typeA, typeB, or typeC corresponding to the first beam.

In a possible implementation, the second resource is included in the first resource. In other words, the second resource reuses the first resource. For example, the second resource is a part or all of the first resource. For example, the second resource is one of a plurality of first resources. For example, the second resource is a plurality of resources in a plurality of first resources. The first resource reuses the second resource, to improve resource utilization.

In a possible implementation, the first indication information is further for activating the first resource and/or the second resource. In this way, there is no need to separately send activation instructions to activate the first resource and/or the second resource, so that signaling overheads can be reduced.

In a possible implementation, second duration is greater than or equal to first duration, the second duration is duration of an interval between a moment (or a slot or symbol) at which the second indication information is received and a moment (or a slot or symbol) at which the first indication information is received, and the first duration is for completing performing the one or more behaviors in the first aspect. Optionally, the first duration is greater than or equal to duration required by the terminal device to complete performing the one or more behaviors in the second aspect. In this way, it can be ensured that when the network device sends the second indication information to the terminal device, the terminal device has measured the first beam, so that the terminal device can quickly and directly switch to the first beam, to improve beam switching efficiency and improve transmission performance.

In a possible implementation, information that is reported by the terminal device and that indicates whether the terminal device supports a capability of measuring a beam to be switched to before the beam switching is received. In this way, the network device sends the first indication information to the terminal device in a targeted manner, to avoid a problem that after sending the first indication information, the terminal device does not have the capability of measuring the beam to be switched to before the beam switching, causing a waste of signaling overheads.

According to a third aspect, a communication apparatus is provided. The apparatus has a function of implementing any one of the first aspect and the possible implementations of the first aspect, or a function of implementing any one of the second aspect and the possible implementations of the second aspect. The function may be implemented by hardware, or may be implemented by hardware by executing corresponding software. The hardware or software includes one or more functional modules corresponding to the foregoing function.

According to a fourth aspect, a communication apparatus is provided. The apparatus includes a processor and a memory. The memory is configured to store computer programs or instructions. The processor is configured to execute a part or all of the computer programs or instructions in the memory. When the part or all of the computer programs or instructions are executed, the processor is configured to implement a function of the terminal device in the method according to any one of the first aspect and the possible implementations of the first aspect, or implement a function of the network device according to any one of the second aspect and the possible implementations of the second aspect.

In a possible implementation, the apparatus may further include a transceiver, and the transceiver is configured to send a signal processed by the processor, or receive a signal input to the processor. The transceiver may perform a sending action or a receiving action performed by the terminal device according to any one of the first aspect and the possible implementations of the first aspect, or perform a sending action or a receiving action performed by the network device according to any one of the second aspect and the possible implementations of the second aspect.

According to a fourth aspect, a communication apparatus is provided. The apparatus includes a processor. The processor is configured to execute a computer program or instructions. When the computer program or instructions are executed, the processor is configured to implement a function of the terminal device in the method according to any one of the first aspect and the possible implementations of the first aspect, or implement a function of the network device in the method according to any one of the second aspect and the possible implementations of the second aspect. The computer program or instructions may be stored in the processor, or may be stored in a memory. The memory is coupled to the processor. The memory may be located in the communication apparatus, or may not be located in the communication apparatus.

In a possible implementation, the apparatus further includes a communication interface. The communication interface is configured to send a signal processed by the processor, or receive a signal input to the processor. The communication interface may perform a sending action or a receiving action performed by the terminal device according to any one of the first aspect and the possible implementations of the first aspect, or perform a sending action or a receiving action performed by the network device according to any one of the second aspect and the possible implementations of the second aspect.

According to a fifth aspect, this application provides a chip system. The chip system includes one or more processors (which may also be referred to as processing circuits). The processor is electrically coupled to a memory (which may also be referred to as a storage medium). The memory may be located in the chip system, or may not be located in the chip system. The memory is configured to store computer programs or instructions. The processor is configured to execute a part or all of the computer programs or instructions in the memory. When the part or all of the computer programs or instructions are executed, the processor is configured to implement a function of the terminal device in the method according to any one of the first aspect and the possible implementations of the first aspect, or implement a function of the network device according to any one of the second aspect and the possible implementations of the second aspect.

In a possible implementation, the chip system may further include an input/output interface, and the input/output interface is configured to output a signal processed by the processor, or receive a signal input to the processor. The input/output interface may perform a sending action or a receiving action performed by the terminal device according to any one of the first aspect and the possible implementations of the first aspect, or perform a sending action or a receiving action performed by the network device according to any one of the second aspect and the possible implementations of the second aspect. Specifically, the output interface performs the sending action, and the input interface performs the receiving action.

In a possible implementation, the chip system may include a chip, or may include a chip and another discrete device.

According to a sixth aspect, a computer-readable storage medium is provided. The computer-readable storage medium is configured to store a computer program. The computer program includes instructions for implementing a function in any one of the first aspect and the possible implementations of the first aspect, or instructions for implementing a function in any one of the second aspect and the possible implementations of the second aspect.

Alternatively, a computer-readable storage medium is provided, and is configured to store a computer program. When the computer program is executed by a computer, the computer is enabled to perform the method performed by the terminal device according to any one of the first aspect and the possible implementations of the first aspect, or perform the method performed by the network device according to any one of the second aspect and the possible implementations of the second aspect.

According to a seventh aspect, a computer program product is provided. The computer program product includes computer program code. When the computer program code is run on a computer, the computer is enabled to perform the method performed by the terminal device according to any one of the first aspect and the possible implementations of the first aspect, or perform the method performed by the network device according to any one of the second aspect and the possible implementations of the second aspect.

According to an eighth aspect, a communication system is provided. The communication system includes the terminal device performing the method according to any one of the first aspect and the possible implementations of the first aspect and the network device performing the method according to any one of the second aspect and the possible implementations of the second aspect.

For technical effects of the third aspect to the eighth aspect, refer to descriptions of the first aspect and the second aspect. Repeated parts are not described again.

### BRIEF DESCRIPTION OF DRAWINGS

FIG. 1 is a schematic diagram of an architecture of a communication system according to this application;
FIG. 2 is a schematic diagram of a beam switching process according to this application;
FIG. 3a is a schematic diagram of a structure of a TCI-state according to this application;
FIG. 3b is a schematic diagram of a structure of a MAC-CE for activating a TCI-state according to this application;
FIG. 3c is a schematic diagram of a structure of a configured spatial relation according to this application;
FIG. 4 is a schematic diagram of a beam switching process according to this application;
FIG. 5a is a schematic diagram of beam switching time according to this application;
FIG. 5b is a schematic diagram of beam switching time according to this application;
FIG. 6 is a schematic diagram of a structure of a beam switching apparatus according to this application;
FIG. 7 is a schematic diagram of a structure of a beam switching apparatus according to this application;
FIG. 8 is a schematic diagram of a structure of a beam switching apparatus according to this application; and
FIG. 9 is a schematic diagram of a structure of a terminal according to this application.

### DESCRIPTION OF EMBODIMENTS

The following describes in detail embodiments of this application with reference to accompanying drawings.

For ease of understanding of technical solutions in embodiments of this application, the following briefly describes an architecture of a system in a method provided in embodiments of this application. It may be understood that the architecture of the system described in embodiments of this application is intended to describe the technical solutions in embodiments of this application more clearly, and do not constitute any limitation on the technical solutions provided in embodiments of this application.

The technical solutions in embodiments of this application may be applied to various communication systems, for example, a wireless local area network (wireless local area network, WLAN) communication system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a 6th generation (6th generation, 6G) system, and a future communication system.

For ease of understanding embodiments of this application, the following describes an application scenario of this application. A network architecture and a service scenario described in embodiments of this application are intended to describe the technical solutions in embodiments of this application more clearly, and do not constitute a limitation on the technical solutions provided in embodiments of this application. A person of ordinary skill in the art may know that, as a new service scenario emerges, the technical solutions provided in embodiments of this application are also applicable to a similar technical problem.

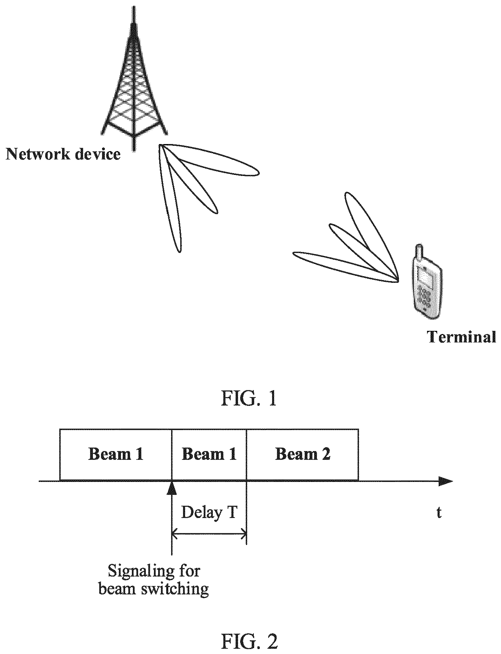

A communication system shown in FIG. 1 includes a network device and a terminal device. The network device and the terminal device perform wireless communication over a beam. The network device and the terminal device may separately generate a plurality of different beams (where different beams refer to beams in different directions). When a transmit beam and a receive beam between the devices are aligned, communication quality is good. Transmit beam alignment herein means that a transmit beam is directional, and a main lobe direction of the transmit beam points to a receiving device. Receive beam alignment means that a receive beam is directional, and a main lobe direction of the receive beam points to a sending device. When the transmit beam and the receive beam are aligned, the two beams may be referred to as an optimal beam pair.

When performing beam switching, the network device sends, to the terminal device, signaling for beam switching. The terminal device needs to first measure information such as timing and path loss of a beam to be switched to (where the beam to be switched to may also be referred to as an updated beam or a beam to be updated to), and then performs beam switching. The beam to be switched to may be a transmit beam of the terminal device, or may be a transmit beam of the network device.

Because it takes a long period, for example, hundreds of milliseconds, to measure the timing and the path loss, the beam to be switched to cannot be used for uplink and downlink transmission in time. Consequently, transmission performance loss is caused. As shown in FIG. 2, a beam switching manner is provided, to reduce transmission performance loss. A delay T is specified. After receiving, from a network device, signaling for beam switching, a terminal device performs transmission over a beam to be switched to (for example, a beam 2) after the specified delay T. Within the delay T, the transmission is still performed over an original beam (for example, a beam 1), to improve transmission performance. Within the delay T, information such as timing and path loss of the beam to be switched to (for example, the beam 2) is measured. Within this period of time T, performance of the original beam (for example, the beam 1) may deteriorate, and consequently, transmission performance loss is still caused in this period of time T.

Based on this, this application further provides a beam switching manner. Before sending, to the terminal device, signaling for beam switching, the network device first notifies the terminal device of a beam to be switched to, and the terminal device may first measure information such as timing and path loss of the beam to be switched to. When the terminal device receives the signaling that is for beam switching and that is sent by the network device, the terminal device may perform beam switching in time, to avoid or reduce transmission performance loss.

For ease of understanding embodiments of this application, the following describes a part of terms in embodiments of this application, to help a person skilled in the art have a better understanding.
(1) A network device is a device that can provide a random access function for a terminal device or a chip that can be disposed in the device. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission reception point, TRP or transmission point, TP), or the like, may be a gNB or a transmission point (TRP or TP) in a 5G system such as an NR system or one antenna panel or one group of antenna panels (including a plurality of antenna panels) of a base station in a 5G system, or may be a network node forming a gNB or a transmission point, for example, a baseband unit (BBU) or a distributed unit (distributed unit, DU).
(2) A terminal device, also referred to as user equipment (user equipment, LTE), a mobile station (mobile station, MS), a mobile terminal (mobile terminal, MT), a terminal, or the like, is a device that provides voice and/or data connectivity for a user. For example, the terminal device is a handheld device, a vehicle-mounted device, or the like that has a wireless connection function. Currently, the terminal device may be a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal (for example, a sensor) in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a wireless terminal in vehicle-to-vehicle (Vehicle-to-Vehicle, V2V) communication, or the like.
(3) A beam may be represented in an NR protocol as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by using a transmission configuration index (index) state (transmission configuration index, TCI-state). The beam may also be indicated by using a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, the TCI-state (including a DL TCI-state and/or a UL TCI-state), the spatial relation (spatial relation), or the like. The foregoing terms are also equivalent to each other. Alternatively, the beam may be replaced with another term representing the beam. This is not limited in this application.

A beam for sending a signal may be referred to as a transmit beam (transmit beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting).

A beam for receiving a signal may be referred to as a receive beam (receive beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting).

The transmit beam may refer to signal strength distribution formed in different directions in space after a signal is transmitted through an antenna. The receive beam may refer to signal strength distribution, in different directions in space, of a radio signal received from an antenna.

The beam may be a wide beam, a narrow beam, or a beam of another type.

A technology for forming the beam may be a beamforming technology or another technology. The beamforming technology may be specifically a digital beamforming technology, an analog beamforming technology, a hybrid digital/analog beamforming technology, or the like

Optionally, a plurality of beams that have same or similar communication features may be considered as one beam. One beam may correspond to one or more antenna ports, and is for transmitting a data channel, a control channel, a sounding signal, and the like. The one or more antenna ports forming (corresponding to) the beam may also be considered as one antenna port set or one antenna port group.

(4) In the protocol, a beam is not directly represented by using the word "beam", but is implicitly described in another manner. A beam generally corresponds to a resource. For example, during beam measurement, the network device configures a plurality of resources for the terminal device, where the plurality of resources are used for beam measurement, and each resource corresponds to one beam. The network device sends reference signals over different beams (on resources corresponding to the different beams). In this case, the network device sends a plurality of reference signals. The terminal device measures quality of the reference signals sent over the different beams (that is, on the different resources), and feeds back the quality of the reference signals to the network device. In this way, the network device learns of quality of a corresponding beam, that is, implements measurement on the beam. The resource may be an uplink signal resource, or may be a downlink signal resource. An uplink signal includes but is not limited to: a sounding reference signal (sounding reference signal, SRS), a demodulation reference signal (demodulation reference signal, DMRS), and a physical random access channel (physical random access channel, PRACH). A downlink signal includes but is not limited to: a channel state information reference signal (channel state information reference signal, CSI-RS), a cell specific reference signal (cell specific reference signal, CS-RS), a LTE specific reference signal (user equipment specific reference signal, US-RS), a synchronization signal/physical broadcast channel block (synchronization system/physical broadcast channel block, SS/PBCH block) (where the SS/PBCH block may be briefly referred to as a synchronization signal block (synchronization signal block, SSB)), and a tracking reference signal (tracking reference signal, TRS).

The network device configures, for the terminal device by using radio resource control (radio resource control, RRC) signaling, the resource for beam measurement. In a configuration structure, one resource is one data structure, and includes a related parameter of an uplink signal corresponding to the resource, a related parameter of a downlink signal corresponding to the resource, and the like. For example, the parameter is a type of the uplink signal or a type of the downlink signal, a resource granularity carrying the uplink signal, a resource granularity carrying the downlink signal, a time point and a periodicity for sending the uplink signal or the downlink signal, a quantity of ports used for sending the uplink signal or the downlink signal, or the like. A resource of each uplink signal or a resource of each downlink signal has a unique index to identify the resource of the uplink signal or the resource of the downlink signal. It may be understood that the index of the resource may also be referred to as an identifier of the resource. This is not limited in embodiments of this application.

(5) The following describes a stipulation about indicating, by the network device, a beam to the terminal device in downlink transmission.

In the downlink transmission, the network device indicates a transmission configuration index (index) state TCI-state to the terminal device. The TCI-state is a parameter set, and includes a plurality of parameters related to a downlink transmit beam (a transmit beam of the network device). Therefore, in this application, it may be considered that the beam and the TCI-state are equivalent and may be replaced with each other.

First, the network device configures the TCI-state for the terminal device.

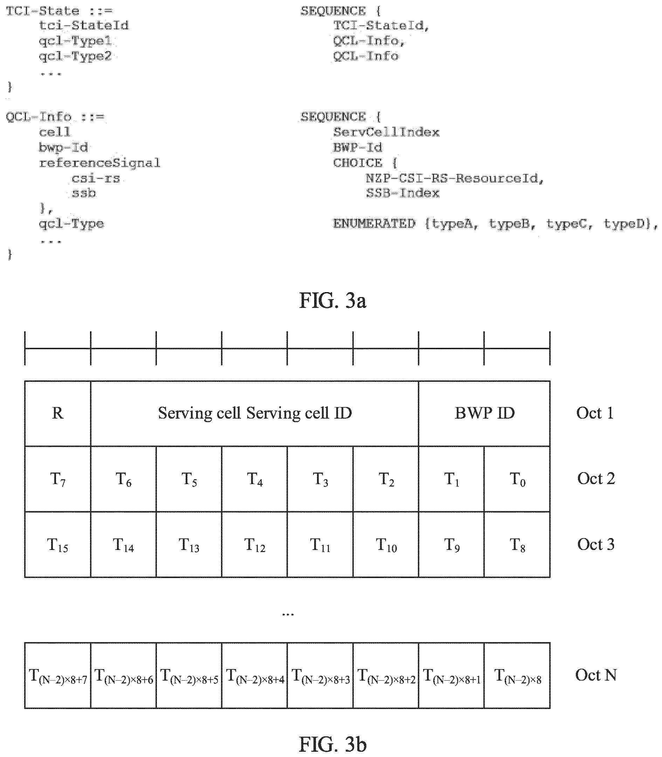

The network device configures a plurality of TCI-states for the terminal device by using RRC signaling. A structure of the TCI-state is shown in FIG. 3a. Each TCI-state includes an index tci-StateId field and two QCL-Info fields. Each QCL-Info field includes one cell (cell) field, one bwp-Id (bandwidth part bandwidth part) field, one referenceSignal (reference signal) field, and one qcl-Type field. The cell field indicates that the TCI-state is used in a cell indicated by the cell field. Different QCL-Info may be configured for different cells, and different QCL-Info may be configured for different bwps of one cell. The bwp-Id field indicates that the TCI-state is used in a bwp indicated by the bwp-Id field. The referenceSignal field indicates that a quasi-colocation (quasi-co-location, QCL) relationship is formed between a resource for a channel (for example, a physical downlink shared channel (physical downlink shared channel, PDSCH) or a physical downlink control channel (physical downlink control channel, PDCCH)) that is transmitted by using the TCI-state and a reference signal resource indicated by the referenceSignal field. The QCL relationship means that two reference signal resources (where the two reference signal resources may also be replaced with two antenna ports, and the antenna ports and the reference signal resources are also in a one-to-one correspondence) have some same spatial parameters. Which spatial parameters of the two reference signal resources are the same depends on the qcl-Type field in the QCL-Info. In addition, the foregoing describes a case in which beam corresponds to (reference signal) resources, and one beam corresponds to one (reference signal) resource. Therefore, that "a QCL relationship is formed between a resource for a channel that is transmitted by using the TCI-state and a reference signal resource indicated by the referenceSignal field" herein means that " a QCL relationship is formed between a beam for the channel that is transmitted by using the TCI-state and a beam indicated by the referenceSignal field". The qcl-Type field has four values: typeA, typeB, typeC, and typeD, where typeA indicates that two reference signal resources have a same Doppler shift (namely, frequency offset), Doppler spread (namely, frequency offset range), average delay (namely, average time offset), and delay spread (namely, time offset range), typeB indicates that two reference signal resources have a same Doppler shift and Doppler spread, typeC indicates that two reference signal resources have a same Doppler shift and average delay, and typeD indicates that two reference signal resources have a same spatial reception parameter, or may be understood as that two transmit beams have a same receive beam. A maximum of one of the two pieces of QCL-Info included in the TCI-state configured by the network device for the terminal device is of typeD. Alternatively, the TCI-state configured by the network device may not include QCL-info of typeD, and the TCI-state that does not include the QCL-info of typeD does not indicate related information of the beam. Therefore, details are not further described herein.

Next, the network device activates the TCI-state for the terminal device.

The network device sends a medium access control-control (medium access control-control element, MAC-CE) message to the terminal device, to activate eight TCI-states in a plurality of configured TCI-states. A structure of a MAC-CE for activating a TCI-state is shown in FIG. 3b. Fields T₀ to T_{(N-2)×8+7} correspond to (configured) TCI-states whose indexes are 0 to (N-2)×8+7. Each of the fields T₀ to T_{(N-2)×8+7} occupies 1 bit, and a field value is 0 or 1. For example, the value of 1 indicates that the TCI-state is activated, and the value of 0 indicates that the TCI-state is not activated. Theoretically, one MAC-CE may have eight fields whose values are 1, and values of other fields are all 0. There are many types of MAC-CEs. In addition to the MAC-CE for activating a TCI-state, there are MAC-CEs for other purposes. This application relates only to a MAC-CE for activating a TCI-state/TCI-state combination. Therefore, unless otherwise specified, the MAC-CE described in this application is the MAC-CE for activating a TCI-state/TCI-state combination.

Then, the network device indicates the TCI-state to the terminal device.

The network device indicates a TCI-state by using a TCI field in downlink control information (downlink control information, DCI). The TCI field occupies three bits and may represent eight different field values (codepoints). Each field value of the TCI field corresponds to a TCI-state index, and the TCI-state index uniquely identifies one TCI-state. TCI-states corresponding to eight fields whose values are 1 in the MAC-CE during a TCI-state activation process are in a one-to-one correspondence with eight different values of the TCI field in the DCI. For example, if a value of the TCI field in the DCI sent by the network device to the terminal device is 000, it indicates that a downlink transmit beam of the network device corresponds to a TCI-state whose index is 000. For another example, if a reference signal included in the QCL-Info of typeD in the TCI-state is a channel state information reference signal CSI-RS (downlink reference signal) whose index is # 1, it indicates that a receive beam used by the terminal device is a receive beam corresponding to the CSI-RS whose index is #1. The terminal device may determine, through a beam measurement process, the receive beam corresponding to the CSI-RS whose index is #1. Therefore, based on a specific value of the TCI field, the terminal device may determine a downlink receive beam, to receive information from the network device over the receive beam.

The foregoing manner of indicating the TCI-state by using the DCI is applicable to a physical downlink shared channel PDSCH. In physical downlink control channel PDCCH transmission, the network device configures a plurality of TCI-states for the terminal device by using RRC. Then, the network device activates (indicates), for (to) the terminal device by using the MAC-CE, one TCI-state for PDCCH transmission, and the TCI-state does not need to be indicated by using the TCI field in the DCI.

(6) The following describes a stipulation about indicating, by the network device to the terminal device, a transmit beam for uplink transmission in uplink transmission.

In the uplink transmission, the network device indicates a spatial relation (spatial relation) to the terminal device. A function of the spatial relation is similar to that of a TCI-state, and is for notifying the terminal device of a specific transmit beam for uplink transmission.

First, the network device configures the spatial relation for the terminal device.

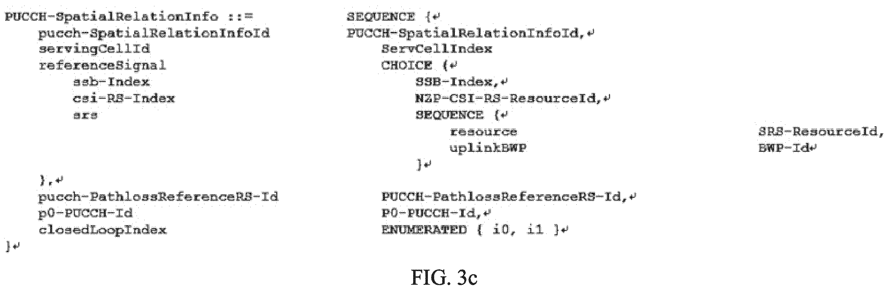

The network device configures a plurality of spatial relations for the terminal device by using RRC signaling. A structure of the spatial relations is shown in FIG. 3c. The spatial relation includes but is not limited to an id of the spatial relation, a cell id, a reference signal resource, a path loss measurement reference signal, a power control parameter, and the like. The reference signal resource (for example, an SRS, an SSB, or a CSI-RS) is for determining the transmit beam for uplink transmission. For example, a spatial relation #1 is used for uplink transmission, and the spatial relation #1 includes a reference signal resource #2. For example, when the reference signal resource #2 is a resource for sending an uplink reference signal (for example, an SRS), it indicates that the transmit beam for uplink transmission is a transmit beam of the uplink reference signal (for example, the SRS) (where the transmit beam of the SRS is known). For another example, when the reference signal resource #2 is a resource for sending a downlink reference signal (for example, an SSB or a CSI-RS), it indicates that a direction of the transmit beam for uplink transmission is the same as a direction of a receive beam of the downlink reference signal (where the receive beam of the SSB or the CSI-RS is known).

Then, the network device activates, for the terminal device, the spatial relation for uplink transmission.

For example, the uplink transmission is physical uplink shared channel (physical uplink control channel, PUCCH) transmission, SRS transmission, or physical uplink shared channel (physical uplink shared channel, PUSCH) transmission, and each transmission needs a corresponding spatial relation. A spatial relation for PUCCH transmission is activated by using MAC-CE signaling. A spatial relation for SRS transmission is activated by using the MAC-CE signaling. The PUSCH transmission is associated with a specific SRS, and the PUSCH transmission is performed by using the spatial relation for SRS transmission.

(7) The following describes beam update (switching) manners for a PDCCH, a PDSCH, a PUCCH, and a PUSCH.

In physical downlink control channel PDCCH transmission, another TCI-state is indicated (activated) again by using a MAC-CE, to update a beam for PDCCH transmission. For example, the PDCCH transmission is originally performed by using a TCI-state 1. When the network device sends, to the terminal device, one MAC-CE indicated by the beam for PDCCH transmission, to indicate a TCI-state 2, the transmit beam for PDCCH transmission changes to the TCI-state 2.

In physical downlink shared channel PDSCH transmission, another TCI-state is indicated again by using DCI, to update a transmit beam for PDSCH transmission.

In physical uplink control channel PUCCH transmission, another spatial relation is indicated again by using a MAC-CE, to update a transmit beam/spatial relation for PUCCH transmission.

In physical uplink control channel PUSCH transmission, another SRS is indicated for the PUSCH transmission, or a beam of an SRS associated with the PUSCH is updated. An update of a beam for sending an SRS may be implemented by using a MAC-CE (applicable to an aperiodic/semi-persistent SRS), or may be reconfigured by using RRC signaling (applicable to a periodic SRS).

The following describes the solutions in detail with reference to the accompanying drawings. Features or content denoted by dashed lines in the figure may be understood as optional operations or optional structures in embodiments of this application.

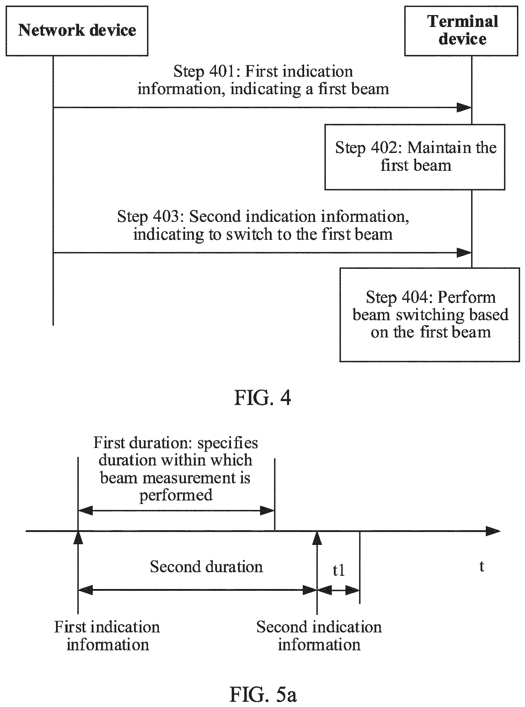

FIG. 4 is a schematic diagram of a beam switching process. The following steps are included.

Step 401: A network device sends first indication information to a terminal device. Accordingly, the terminal device receives the first indication information from the network device, where the first indication information indicates a first beam. The first indication information may indicate one first beam, or may indicate a plurality of first beams, where the plurality of first beams are different (where "different" may be understood as "having different directions").

The first beam may be a beam that is predicted by the network device and that will replace a current transmit beam as a transmit beam in the future. It may be understood as that the first indication information indicates the first beam to be switched to. The first beam is a transmit beam on the network device side (namely, a downlink transmit beam), or the first beam is a transmit beam on the terminal device side (namely, an uplink transmit beam), or the first beam includes a transmit beam on the network device side and a transmit beam on the terminal device side (that is, the first beam is a beam for both uplink and downlink transmission).

The first beam may be represented as a TCI-state, a spatial relation, a beam ID, a unified TCI, a UL-TCI, a common beam, QCL information, a QCL assumption, a spatial filter, or another definition that may represent a beam described above. Details are not described again. For example, the first beam may also be referred to as a first TCI-state, a first spatial relation, a first unified TCI, or the like. In other words, the "beam" in the first beam may be replaced with any definition that can represent the "beam" described above.

The first beam may be for transmission of a single channel, for example, transmission of a PDCCH, transmission of a PDSCH, transmission of a PUCCH, or transmission of a PUSCH. First beams corresponding to different channels may be separately indicated.

The first beam may alternatively be for transmission of a plurality of channels, for example, transmission of one or more of the following channels. For example, the first beam is for transmission of a data channel (where the data channel includes but is not limited to one or more of a PDSCH, a PUSCH, and a physical sidelink shared channel (physical sidelink share channel, PSSCH)). For example, the first beam is for transmission of a control channel (where the control channel includes but is not limited to one or more of a PUCCH, a PDCCH, and a physical sidelink control channel (physical sidelink control channel, PSCCH)). For example, the first beam is for transmission of an uplink channel (where the uplink channel includes but is not limited to one or more of a PRACH, a random access msg3, a PUCCH, and a PUSCH). For example, the first beam is for transmission of a downlink channel (where the downlink channel includes but is not limited to one or more of a random access msg2, a random access msg4, a PDCCH, a PDSCH, and a physical broadcast channel (physical broadcast channel, PBCH)).

The first beam may be for transmission of a single cell, and first beams corresponding to different cells may be separately indicated.

The first beam may be for transmission of a plurality of cells, and the plurality of cells correspond to a same frequency band.

For example, when the first beam is a common beam common beam, the common beam is for transmission of one or more of the following channels: for example, an uplink channel, a downlink channel, a control channel, a plurality of data channels, a channel of one cell, and uplink channels, downlink channels, control channels, or data channels of a plurality of cells.

The first beam may be for transmission of a single reference signal or a plurality of reference signals, for example, transmission of a downlink reference signal (where the downlink reference signal includes but is not limited to an SSB, a DMRS, and a CSI-RS), or transmission of an uplink reference signal (where the uplink reference signal includes but is not limited to a phase tracking reference signal (phase tracking reference signal, PTRS) and an SRS).

The first indication information includes but is not limited to one or more of the following information, for example, an index of the first beam, a TCI-state corresponding to the first beam, an index of the TCI-state corresponding to the first beam, a spatial relation corresponding to the first beam, and an index of the spatial relation corresponding to the first beam. The first beam is indicated by using the information. The first indication information may alternatively include other information that can indicate a beam, to indicate the first beam.

For example, when the first indication information is carried in RRC signaling, the first indication information includes but is not limited to the TCI-state corresponding to the first beam or the spatial relation corresponding to the first beam. It may be understood as that related information of the first beam is configured by the network device by using the RRC signaling.

For example, when the first indication information is carried in MAC-CE signaling, the first indication information includes but is not limited to the index of the first beam, the index of the TCI-state, the index of the spatial relation, or the like. It may be understood as that the first beam is an activated beam in beams (for example, TCI -states corresponding to the beams or spatial relations corresponding to the beams) configured by using the RRC signaling, and the MAC-CE signaling is faster than the RRC signaling. For example, two beams may be activated by using the MAC-CE signaling. One beam is a transmit beam for current transmission, and the other beam is the first beam (namely, a transmit beam for future transmission, namely, a beam that replaces the transmit beam for current transmission). A plurality of beams may be activated by using the MAC-CE signaling. For example, the 1^{st} beam indicates a transmit beam for current transmission, and the 2^{nd} beam is used as the first beam. Alternatively, the last beam, the last but one beam, or the like is used as the first beam.

For example, when the first indication information is carried in DCI signaling, the first indication information includes but is not limited to the index of the first beam, the index of the TCI-state, the index of the spatial relation, or the like. It may be understood as that the first beam is a beam that is indicated by using DCI and that is in beams (for example, TCI-states corresponding to the beams or spatial relations corresponding to the beams) configured by using the RRC signaling.

For example, when the first beam is for transmission of an SRS, the first indication information may be carried in the MAC-CE signaling. Two spatial relations for the transmission of the SRS are activated by using the MAC-CE signaling, and the 2^{nd} spatial relation is the spatial relation corresponding to the first beam.

Step 402: After receiving the first indication information sent by the network device, the terminal device may determine the first beam, and maintain the first beam, where the maintenance includes but is not limited to measuring timing information and/or path loss information corresponding to the first beam. If the first indication information indicates a plurality of first beams, the terminal device separately maintains each first beam. The following uses only one first beam as an example to describe an example of maintaining the first beam.

During the maintenance of the first beam, the terminal device performs, for example, but not limited to, one or more of the following behaviors:
Behavior 1: Measuring downlink time offset information corresponding to the first beam, where the "downlink time offset information" may be referred to as "downlink timing information".
Behavior 2: Measuring downlink frequency offset information corresponding to the first beam, where behavior 1 and behavior 2 may be combined as measuring downlink time-frequency offset information corresponding to the first beam.
Behavior 3: Measuring the path loss information corresponding to the first beam.
Behavior 4: Sending, based on the first beam, a signal for uplink timing measurement.
Behavior 5: Receiving uplink timing adjustment information from the network device, where the timing adjustment information is determined based on the first beam. Behavior 4 and behavior 5 may also be combined as measuring or determining uplink timing information corresponding to the first beam. Behavior 1, behavior 4, and behavior 5 may also be combined as measuring or determining the timing information corresponding to the first beam. The timing information includes the uplink timing information and/or the downlink timing information.
Behavior 6: Initiating random access, for example, performing random access on a PRACH resource corresponding to the first beam.

The following describes these behaviors in detail.

After receiving the first indication information, the terminal device may perform one or more of the behaviors in step 402. Alternatively, after returning ACK information for the first indication information to the network device, the terminal device may perform one or more of the behaviors in step 402. Alternatively, a period of time may be specified. To be specific, the terminal device performs one or more of the behaviors in step 402 after the period of time after receiving the first indication information or after the period of time after returning ACK information.

In addition, a first moment may be specified. To be specific, at the first moment, the terminal device starts to perform step 402. The first moment may be at a slot slot level, a symbol level, or a millisecond level. The "first moment" may alternatively be replaced with a "first time unit". The first moment may be a moment at which the first indication information is received, for example, a slot or a symbol in which the first indication information is received. Alternatively, the first moment may be a moment at which the acknowledgement ACK information corresponding to the first indication information is sent to the network device, for example, a slot or a symbol in which the ACK information corresponding to the first indication information is fed back. Alternatively, the first moment may be a moment (where the moment may be replaced with a slot or a symbol) that equals a moment (where the moment may be replaced with a symbol or a slot) at which the ACK information corresponding to the first indication information is sent to the network device plus a time interval, where the time interval may be 3 milliseconds. In other words, the first moment is the symbol or the slot in which the ACK information corresponding to the first indication information is fed back to the network device plus 3 milliseconds. Alternatively, the first moment may be a moment (where the moment may be replaced with a symbol or a slot) that equals a moment (where the moment may be replaced with a symbol or a slot) at which the first indication information is received plus a time interval.

In addition, first duration may be further specified. To be specific, the terminal device needs to complete performing step 402 within the first duration, in other words, the first duration is for completing performing step 402. Optionally, the first duration is greater than or equal to duration required for completing performing one or more of the behaviors in the first aspect. The first duration may be determined by the network device, and is configured by the network device for the terminal device. Alternatively, the first duration may be determined by the terminal device. Optionally, the terminal device reports the first duration to the network device. Alternatively, the first duration may be specified in a protocol. A value of the first duration includes but is not limited to the following examples:

In an example, the first duration may be T_{HARQ}+3 ms. In an example, the first duration may be T_{HARQ}+3 ms+TOₖ×(T_{first-SSB}+T_{SSB-proc}). T_{HARQ} is duration between the moment at which the first indication information is received and the moment at which the ACK information corresponding to the first indication information is fed back. T_{first-SSB} is duration between a current moment and next SSB sending. T_{SSB-proc} is duration of SSB measurement. T_{SSB-proc} may be set to a fixed value, for example, 2 ms. TOₖ may be 0 or a non-zero value.

When indicating the first beam, the network device may further indicate a resource for performing one or more of the behaviors in step 402, for example, indicate one or more resource configurations, resource sets, resources, or reporting configurations; indicate a trigger state trigger state, where the trigger state is for triggering aperiodic measurement, and is for measuring the first beam; or indicate activation signaling for semi-persistent (semi-persistent, SP) measurement reporting, where the activation signaling is for activating SP measurement, and is for measuring the first beam. Information about the resource for beam measurement may be carried in the first indication information.

Step 403: The network device sends second indication information to the terminal device. Accordingly, the terminal device receives the second indication information from the network device. The second indication information indicates to switch to the first beam.

It should be noted that step 402 is performed at the first moment, and it may take a period of time (namely, the first duration) to complete performing step 402. When step 403 is performed, step 402 may be completed, or may not be completed. If step 402 is not completed, when step 403 is performed, step 402 may continue to be performed rather than being stopped.

Step 404: The network device and the terminal perform beam switching based on the first beam.

The second indication information may include but is not limited to one or more of the following information, for example, an index of the first beam, a TCI-state corresponding to the first beam, an index of the TCI-state corresponding to the first beam, a spatial relation corresponding to the first beam, and an index of the spatial relation corresponding to the first beam. The first beam is indicated by using the information. The second indication information may alternatively include other information that can indicate a beam, to indicate the first beam.

In addition, the second indication information sent by the network device to the terminal device may alternatively indicate to switch to a second beam. If the first beam is different from the second beam, it indicates that the network device re-indicates a beam to be switched to. The terminal device may perform path loss measurement, positioning measurement, and/or the like on the second beam.

If the first beam is a transmit beam on the network device side, the network device switches the transmit beam of the network device to the first beam, and the terminal device switches a transmit beam of the terminal device to a receive beam corresponding to the first beam. If the first beam is a transmit beam on the terminal device side, the network device switches a transmit beam of the network device to a receive beam corresponding to the first beam, and the terminal device switches the transmit beam of the terminal device to the first beam.

Before sending, to the terminal device, the second indication information for beam switching, the network device first notifies the terminal device of the first beam to be switched to. In this case, the terminal device may first measure the timing information and/or the path loss information of the first beam to be switched to. Further, when receiving the second indication information for beam switching, the terminal device has performed a process of measuring the timing information and/or the path loss information of the first beam or has performed a part of the process of measuring the timing information and/or the path loss information of the first beam. In this way, a delay generated because the terminal device needs to first measure information such as timing and path loss of the first beam to be switched to when switching to the first beam can be reduced or avoided, to avoid transmission performance loss.

In this application, duration of an interval between the second indication information and the first indication information is defined as second duration. It may be understood that the second duration between the first indication information and the second indication information may be any one of the following: a difference between a moment at which the network device sends the first indication information and a moment at which the network device sends the second indication information, a difference between the moment at which the terminal device receives the first indication information and a moment at which the terminal device receives the second indication information, a difference between the moment at which the network device sends the first indication information and the moment at which the terminal device receives the second indication information, and a difference between the moment at which the terminal device receives the first indication information and the moment at which the network device sends the second indication information. The moment may be at a slot, symbol, or millisecond level, or may be replaced with a slot or a symbol.

The second duration may be greater than or equal to the first duration. The first duration is for completing performing one or more of the behaviors in step 402. In this way, it can be ensured that the terminal device has completed measurement (maintenance) on the first beam when receiving the second indication information. In this way, the terminal device can quickly and directly switch to the first beam, to improve beam switching efficiency, and improve transmission performance. Optionally, an additional condition may also be specified. To be specific, when the second indication information indicates that the beam to be switched to is the first beam, the second duration between the second indication information and the first indication information is greater than or equal to the first duration. If the second indication information indicates that the beam to be switched to is not the first beam, the second duration between the second indication information and the first indication information may not be limited. Optionally, regardless of whether the second indication information indicates that the beam to be switched to is the first beam, the second duration between the first indication information and the second indication information may not be limited. The second indication information may be sent at any moment after the first indication information is sent. However, the moment at which the second indication information is sent determines a moment at which the beam switching occurs.

Duration of an interval between the moment at which the terminal device receives the second indication information and a moment at which the beam switching is completed (where that the beam switching is completed may be understood as that a new beam may be used for transmission) is defined as effective duration t1 of the second indication information. Alternatively, duration of an interval between the first moment at which the terminal device starts to perform step 402 and a moment at which the beam switching is completed is defined as effective duration t1 of the second indication information.

As shown in FIG. 5a, in a scenario in which the second duration between the second indication information and the first indication information is greater than or equal to the first duration, when receiving the second indication information for beam switching, the terminal device has completed a beam maintenance process in step 402. A value of t1 may be any value greater than or equal to 0. For example, t1 may be equal to 0, which indicates that the beam switching may be completed immediately. For example, t1 may alternatively be equal to duration between the moment at which the terminal device receives the second indication information and a moment at which the terminal device feeds back an ACK for the second indication information. For example, t1 may be the duration between the moment at which the second indication information is received and the moment at which the ACK for the second indication information is fed back plus 3 milliseconds, namely, T_{HARQ}+3 ms. It should be noted that the T_{HARQ} herein is the duration between the moment at which the second indication information is received and the moment at which the ACK for the second indication information is fed back, and may be the same as or different from the duration between the moment at which the first indication information is received and the moment at which the ACK for the first indication information is fed back. For example, t1 may be T_{HARQ}+3 ms+TOₖ×(T_{first-SSB}+T_{SSB-proc}). It should be noted that the T_{HARQ} herein is the duration between the moment at which the second indication information is received and the moment at which the ACK for the second indication information is fed back, and may be the same as or different from the duration between the moment at which the first indication information is received and the moment at which the ACK for the first indication information is fed back.

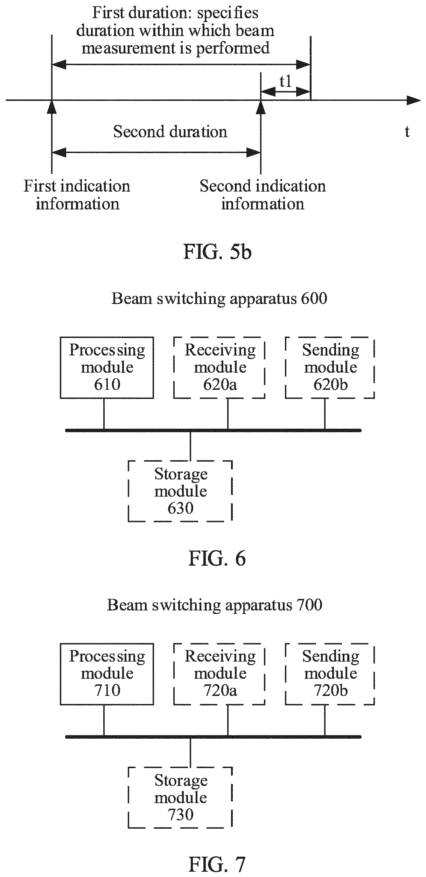

As shown in FIG. 5b, in a scenario in which the second duration between the second indication information and the first indication information is less than the first duration, when receiving the second indication information for beam switching, the terminal device may have not completed a beam maintenance process in step 402. A value of t1 is described below.

In an example, t1=First duration-Second duration.

In an example, t1=First duration-Second duration+One time interval. For example, the time interval is 3 ms, or T_{HARQ}+3 ms, or T_{HARQ}+3 ms+TOₖ×(T_{first-SSB}+T_{SSB-proc}). T_{HARQ} is duration between the moment at which the second indication information is received and a moment at which ACK information corresponding to the second indication information is fed back, T_{first-SSB} is duration between a current moment and next SSB sending, T_{SSB-proc} is duration of SSB measurement, and T_{SSB-proc} may be set to a fixed value, for example, 2 ms. TOₖ may be 0 or a non-zero value.

In an example, t1 is duration of an interval between a second moment and a moment that equals the first moment plus the first duration. The second moment may be at a slot slot level, a symbol level, or a millisecond level. The second moment may be the moment at which the second indication information is received, for example, a slot or a symbol in which the second indication information is received. Alternatively, the second moment may be the moment at which the acknowledgement ACK information corresponding to the second indication information is sent to the network device, for example, a slot or a symbol in which the ACK information corresponding to the second indication information is fed back. Alternatively, the second moment may be the moment (for example, a symbol or a slot) at which the ACK information corresponding to the second indication information is sent to the network device plus a time interval, and the time interval may be 3 milliseconds. In other words, the second moment is the symbol or the slot in which the ACK information corresponding to the second indication information is fed back to the network device plus 3 milliseconds. Alternatively, the second moment may be the moment (for example, the symbol or the slot) at which the second indication information is received plus a time interval.

In an example, t1 is 3 ms, or T_{HARQ}+3 ms, or T_{HARQ}+3 ms+TOₖ×(T_{fist-SSB}+T_{SSB-proc}). T_{HARQ} is duration between the moment at which the second indication information is received and a moment at which ACK information corresponding to the second indication information is fed back. T_{first-SSB} is duration between a current moment and next SSB sending. T_{SSB-proc} is duration of SSB measurement. T_{SSB-proc} may be set to a fixed value, for example, 2 ms. TOₖ may be 0 or a non-zero value.

In an example, t1 may be a maximum value, a minimum value, an average value, or the like of Ta and Th. For example, Ta=First duration-Second duration. For example, Ta=First duration-Second duration+One time interval. For example, Ta is duration of an interval between a second moment and a moment that equals the first moment plus the first duration. For the second moment, refer to descriptions of the foregoing example. Details are not described again. For example, Tb=T_{HARQ}+3 ms. For example, Tb=T_{HARQ}+3 ms+TOₖ×(T_{first-SSB}+T_{SSB-proc}). T_{HARQ} is duration between the moment at which the second indication information is received and the moment at which the ACK information corresponding to the second indication information is fed back. T_{first-SSB} is duration between a current moment and next SSB sending. T_{SSB-proc} is duration of SSB measurement. T_{SSB-proc} may be set to a fixed value, for example, 2 ms. TOₖ may be 0 or a non-zero value.

In a scenario in which the second duration between the second indication information and the first indication information is less than the first duration, a prerequisite for a value of t1 may be that the beam indicated by the second indication information is the first beam. If the second indication information indicates that the beam to be switched to is not the first beam, the value of t1 is not limited. For example, t1 is 3 ms, or T_{HARQ}+3 ms, or T_{HARQ}+3 ms+TOₖ×(T_{first-SSB}+T_{SSB-proc}). T_{HARQ} is duration between the moment at which the second indication information is received and the moment at which the ACK information corresponding to the second indication information is fed back, T_{first-SSB} is duration between a current moment and next SSB sending, T_{SSB-proc} is duration of SSB measurement, and T_{SSB-proc} may be set to a fixed value, for example, 2 ms. TOₖ may be 0 or a non-zero value.

The following uses a specific example for description. It is assumed that the second indication information for beam switching is received in a slot n. The terminal device completes the beam switching within duration T_{HARQ}+3 ms (namely, 3 ms after the second indication information is received). At a moment that equals n+T_{HARQ}+3 ms, the terminal device uses the second indication information to indicate the beam to be switched to for transmission.

The following describes several behaviors in step 402 in detail.

First, the following describes behavior 1: measuring the downlink timing information (namely, the downlink time offset information) corresponding to the first beam. Behavior 1 is usually applicable to a scenario in which the first beam includes a transmit beam (a downlink transmit beam) on the network device side.

The terminal device measures, based on one or more first resources, the downlink time offset information corresponding to the first beam.

The first resource is for measuring the downlink time offset information corresponding to the first beam, and the first resource may also be referred to as a first measurement resource, a downlink timing measurement resource, a timing measurement resource, or the like.

The one or more first resources may also be referred to as a set of first resources, and the set of first resources includes the one or more first resources.

The downlink timing information may be measured by using a downlink signal, and the downlink signal may be, for example, a synchronization signal and broadcast channel resource block SSB, a channel state information reference signal CSI-RS, or a time-frequency tracking reference signal TRS. The first resource is a resource for transmitting the downlink signal, and the first resource may be referred to as a downlink signal resource. For example, the first resource may be an SSB resource, a CSI-RS resource, or a TRS resource. For example, the set of first resources is a CSI-RS resource set (CSI-RS resource set) configured with a trs-Info parameter, and the CSI-RS resource set includes one or more CSI-RSs.

The set of first resources may be configured by the network device for the terminal device, or may be specified in the protocol. Optionally, when indicating the first beam, the network device may further indicate a resource for measuring the downlink timing information. In this case, the first indication information may further include information about the one or more first resources. Alternatively, the network device may configure the one or more first resources for the terminal device by using other indication information or configuration information that is different from the first indication information.

That the terminal device measures, based on one or more first resources, the downlink time offset information corresponding to the first beam may specifically be: The network device sends the downlink signal to the terminal device on the first resource, and the terminal device receives the downlink signal from the network device on the first resource, to measure the downlink time offset information. The network device may send, on the first resource over the first beam, the downlink signal for measuring the downlink time offset information, or send, on the first resource over a beam that is in a same direction as the first beam, the downlink signal for measuring the downlink time offset information. In this way, the measured downlink time offset information is the downlink time offset information corresponding to the first beam. It may be understood that the network device does not need to additionally notify the terminal device of the beam for sending the downlink signal on the first resource, to reduce signaling overheads.

In this application, association relationships between the first beam and the first resource are as follows:

In an example 1, the first resource and the first beam satisfy a quasi-colocation QCL relationship of typeD. In other words, a receive beam of the downlink signal for measuring the downlink time offset information is the same as a receive beam of the first beam (where in this application, that beams are the same may be understood as that the beams are in a same direction). The first resource may be a quasi-colocation resource (where the quasi-colocation resource is a reference signal resource in QCL information) of typeA, typeB, or typeC in (the TCI-state corresponding to) the first beam.

In an example 2, the first resource and a quasi-colocation resource (where the quasi-colocation resource is a reference signal resource in QCL information) of typeD in (the TCI-state corresponding to) the first beam satisfy a quasi-colocation QCL relationship of typeD. If the first resource may be the quasi-colocation resource (where the quasi-colocation resource is the reference signal resource in the QCL information) of typeA, typeB, or typeC in (the TCI-state corresponding to) the first beam, the quasi-colocation resource (where the quasi-colocation resource is the reference signal resource in the QCL information) of typeA, typeB, or typeC in (the TCI-state corresponding to) the first beam and the quasi-colocation resource (where the quasi-colocation resource is the reference signal resource in the QCL information) of typeD in (the TCI-state corresponding to) the first beam satisfy the quasi-colocation QCL relationship of typeD.

For example, a structure of the TCI-state corresponding to the first beam is as follows:

```
          TCI-state {
          QCL-info {typeA, RS #1}
          QCL-info {typeD, RS #2}
 }.
```

The RS #1 (a reference signal resource in QCL information (where the QCL information is QCL-info) of typeA) and the RS #2 (a reference signal resource in QCL information of typeD) satisfy a QCL relationship of typeD, in other words, a receive beam of the RS #1 is the same as a receive beam of the RS #2.

The first beam uses downlink time offset information of the first resource (for example, the RS #1 described above) as the downlink time offset information corresponding to the first beam. In other words, the first beam and the first resource (for example, one or more resources in the set of first resources) satisfy a quasi-colocation QCL relationship of typeA, typeB, or typeC.

In the foregoing method, when the first beam is updated, the network device does not need to reconfigure (the TCI-state corresponding to) the beam of the first resource or the QCL information of typeD by using the configuration information, because the first resource and the first beam always satisfy the QCL relationship of typeD. In other words, (the TCI-state corresponding to) the beam corresponding to the first resource or the QCL information of typeD is automatically updated with an update of the first beam, to reduce signaling overheads.

The following describes behavior 2: measuring the downlink frequency offset information corresponding to the first beam. Behavior 2 is usually applicable to the scenario in which the first beam includes a transmit beam (a downlink transmit beam) on the network device side.

Specific details of measuring the downlink time offset information corresponding to the first beam in behavior 1 described above are also applicable to measuring the downlink frequency offset information corresponding to the first beam. Only names of resources and/or signals for measurement may be different, and other details may be mutually referenced.

The terminal device measures, based on one or more third resources, the downlink frequency offset information corresponding to the first beam.

The third resource is for measuring the downlink frequency offset information corresponding to the first beam, and the third resource may also be referred to as a third measurement resource, a downlink frequency offset measurement resource, or the like.

The one or more third resources may also be referred to as a set of third resources, and the set of third resources includes the one or more third resources.

The downlink frequency offset information may be measured by using a downlink signal. The downlink signal may be any downlink signal described above, and details are not described again.

The third resource may be configured by the network device for the terminal device, or may be specified in the protocol. Optionally, when indicating the first beam, the network device may further indicate a resource for measuring the downlink frequency offset information. In this case, the first indication information may further include information about the one or more third resources. Alternatively, the network device may configure the one or more third resources for the terminal device by using other indication information or configuration information that is different from the first indication information.

That the terminal device measures, based on one or more third resources, the downlink frequency offset information corresponding to the first beam may specifically be: The network device sends the downlink signal to the terminal device on the third resource, and the terminal device receives the downlink signal from the network device on the third resource, to measure the downlink frequency offset information. The network device may send, on the third resource over the first beam, the downlink signal for measuring the downlink frequency offset information, or send, on the third resource over a beam that is in a same direction as the first beam, the downlink signal for measuring the downlink time frequency information. In this way, the measured downlink frequency offset information is the downlink frequency offset information corresponding to the first beam. It may be understood that the network device does not need to additionally notify the terminal device of the beam for sending the downlink signal on the third resource, to reduce signaling overheads.

In this application, an association relationship between the first beam and the third resource may be any one of the association relationships between the first resource and the first beam described above, and only the first resource needs to be replaced with the third resource.

In addition, to reduce resource overheads and improve resource utilization, the third resource for the downlink frequency offset information and the first resource for measuring the downlink time offset information may be mutually reused. The first resource and the third resource may be completely the same (that is, the downlink frequency offset information corresponding to the first beam is measured based on the one or more first resources), or may be partially the same. The first resource may be a part of the third resource (that is, the first resource is included in the third resource), or the third resource may be a part of the first resource (that is, the third resource is included in the first resource).

The following describes behavior 3: measuring the path loss information corresponding to the first beam. Behavior 3 is usually applicable to the scenario in which the first beam includes a transmit beam (a downlink transmit beam) on the network device side.

Specific details of measuring the downlink time offset information corresponding to the first beam in behavior 1 described above are also applicable to measuring the path loss information corresponding to the first beam. Only names of resources and/or signals for measurement may be different, and other details may be mutually referenced.

The terminal device measures, based on one or more second resources, the path loss information corresponding to the first beam.

The second resource is for measuring the path loss information corresponding to the first beam, and the second resource may also be referred to as a second measurement resource, a path loss measurement resource, or the like.

The one or more second resources may also be referred to as a set of second resources, and the set of second resources includes the one or more second resources.

The path loss information may be measured by using a downlink signal. The downlink signal may be any downlink signal described above, and details are not described again.

The second resource may be configured by the network device for the terminal device, or may be specified in the protocol. Optionally, when indicating the first beam, the network device may further indicate a resource for measuring the path loss information. In this case, the first indication information may further include information about the one or more second resources. Alternatively, the network device may configure the one or more second resources for the terminal device by using other indication information or configuration information that is different from the first indication information.

That the terminal device measures, based on one or more second resources, the path loss information corresponding to the first beam may specifically be: The network device sends the downlink signal to the terminal device on the second resource, and the terminal device receives the downlink signal from the network device on the second resource, to measure the path loss information. The network device may send, on the second resource over the first beam, the downlink signal for measuring the path loss information, or send, on the second resource over a beam that is in a same direction as the first beam, the downlink signal for measuring the path loss information. In this way, the measured path loss information is the path loss information corresponding to the first beam. It may be understood that the network device does not need to additionally notify the terminal device of the beam for sending the downlink signal on the second resource, to reduce signaling overheads.

When the path loss information corresponding to the first beam is measured based on a plurality of second resources, the path loss information corresponding to the first beam is first measured based on each second resource, to obtain a plurality of corresponding path loss information measurement results. Then, an average value, a maximum value, or a minimum value of the plurality of path loss information measurement results may be determined, and the average value, the maximum value, or the minimum value is used as a finally obtained path loss information measurement result of the first beam. Alternatively, filtering processing (where the filtering processing may be understood as weighted averaging) is performed on the plurality of path loss information measurement results, and a path loss information measurement result obtained through the filtering processing is used as a finally obtained path loss information measurement result of the first beam. Calculating the average value and performing filtering processing can reduce measurement fluctuation.

In this application, an association relationship between the first beam and the second resource may be any one of the association relationships between the first resource and the first beam described above, and only the first resource needs to be replaced with the second resource. For example, the second resource and the first beam satisfy the quasi-colocation relationship of typeD, or the second resource and the quasi-colocation resource of typeD corresponding to the first beam satisfy the quasi-colocation relationship of typeD.

In addition, to reduce resource overheads, the second resource for the path loss information and the first resource for measuring the downlink time offset information may be mutually reused. The first resource and the second resource may be completely the same, or may be partially the same. The first resource may be a part of the second resource (that is, the first resource is included in the second resource), or the second resource may be a part of the first resource (that is, the second resource is included in the first resource). In addition, the second resource and the third resource may be mutually reused.

For example, the second resource for measuring the path loss information reuses the first resource for measuring the downlink timing information. For example, the second resource is the first resource. For example, the second resource is one of a plurality of first resources. For example, the second resource is a plurality of resources in a plurality of first resources.

The following describes several examples by using an example in which the second resource reuses the first resource.

In an example, when the second resource is one of the first resources, the resource may be the 1^{st} resource, the last resource, a resource with a smallest index, or a resource with a largest index in the first resources. For example, when the plurality of first resources belong to a plurality of resource sets, the resource may be the 1^{st} resource in an n^{th} resource set, or the last resource in the n^{th} resource set, or a resource with a smallest index in the n^{th} resource set, or a resource with a largest index in the n^{th} resource set. The n^{th} resource set may be the 1^{st} resource set, the last resource set, the 2^{nd} resource set, the 3^{rd} resource set, any resource set, or the like.

In an example, a reference signal resource (namely, the first resource) in the QCL information of typeA, typeB, or typeC corresponding to the first beam is used as the second resource.

In an example, all resources in a resource set to which a reference signal resource (namely, the first resource) in the QCL information of typeA, typeB, or typeC corresponding to the first beam belongs are used as the second resources, to measure the path loss information. All resources in a resource set in which trs-info is configured and to which a reference signal resource in the QCL information of typeA, typeB, or typeC corresponding to the first beam belongs are used as the second resources.

The example described above is also applicable to a case in which "the first resource is a part or all of the second resource", and only the first resource and the second resource need to be reversed, in other words, the first resource is replaced with the second resource, and the second resource is replaced with the first resource.

The example described above is also applicable to a case in which "the first resource is a part or all of the third resource", and only the first resource needs to be replaced with the third resource, and the second resource needs to be replaced with the first resource.

The example described above is also applicable to a case in which "the third resource is a part or all of the first resource", and only the second resource needs to be replaced with the third resource.

The following describes behavior 4: sending, based on the first beam, the signal for uplink timing measurement. Accordingly, the network device receives the signal for uplink timing measurement. Further, the network device sends the uplink timing adjustment information to the terminal device, and the terminal device performs behavior 5: receiving the uplink timing adjustment information from the network device. For example, the network device sends a timing adjustment (timing adjustment, TA) command to the terminal device, where the TA command includes the uplink timing adjustment information. Subsequently, the terminal device performs transmission by using the uplink timing adjustment information.

The terminal device measures, based on one or more fourth resources, the uplink timing information corresponding to the first beam.

The fourth resource is for measuring the uplink timing information corresponding to the first beam, and the fourth resource may also be referred to as a fourth measurement resource, an uplink timing measurement resource, a timing measurement resource, or the like.

The one or more fourth resources may also be referred to as a set of fourth resources, and the set of fourth resources includes the one or more fourth resources.

The uplink timing information may be measured by using an uplink signal, and the uplink signal may be, for example, an SRS or a PRACH. In other words, the reference signal sent in behavior 4 may be the SRS or the PRACH. The fourth resource is a resource for beam switching. The fourth resource may also be referred to as an uplink signal source. For example, the fourth resource may be an SRS resource or a PRACH resource.

The set of fourth resources may be configured by the network device for the terminal device, or may be specified in the protocol. Optionally, when indicating the first beam, the network device may further indicate a resource for measuring the uplink timing information. In this case, the first indication information may further include information about the one or more fourth resources. Alternatively, the network device may configure the one or more fourth resources for the terminal device by using other indication information or configuration information that is different from the first indication information.

That the terminal device measures the uplink timing information corresponding to the first beam may be: The terminal device may send the uplink signal to the network device on the fourth resource, and the network device receives the uplink signal from the terminal device on the fourth resource, to measure the uplink timing information.

When the first beam is a transmit beam on the network device side, a specific process in which the terminal device sends, based on the first beam, the signal for uplink timing measurement in behavior 4 may be: The terminal device sends, over the receive beam of the first beam (where the receive beam of the first beam may also be understood as a transmit beam in a same direction as the receive beam of the first beam), the uplink signal for measuring the uplink timing information. In other words, the terminal device uses a receive beam A as the receive beam of the first beam, and sends, by using a transmit beam in a same direction as the receive beam A, the uplink signal for measuring the uplink timing information.

When the first beam is a transmit beam on the terminal device side, a specific process in which the terminal device sends, based on the first beam, the signal for uplink timing measurement in behavior 4 may be: The terminal device sends, over the first beam, the uplink signal for measuring the uplink timing information, in other words, a transmit beam of the uplink signal for measuring the uplink timing information is the first beam.

One or more of the first resource, the second resource, the third resource, and the fourth resource may be used after being configured or activated. The network device may send the activation signaling to the terminal device, to activate a resource for measuring the first beam. To reduce the signaling overheads, the first indication information may be for activating the resource for measuring the first beam. In other words, the first indication information may be further for activating the one or more of the first resource, the second resource, the third resource, and the fourth resource. In this way, when the network device sends the first indication information, the resource associated with the first beam is automatically activated, and no additional activation signaling needs to be sent. The first indication information may be further for deactivating or canceling the first beam. After the first beam is deactivated or canceled, a corresponding measurement resource is also deactivated or canceled.

The beam switching process is described above, and details are described below.

The first indication information may be the RRC signaling, the MAC-CE signaling, or the DCI signaling (or the first indication information is carried in the RRC signaling, the MAC-CE signaling, or the DCI signaling). The first indication information may indicate one or more first beams, and the first beam is an uplink transmit beam or a beam for both uplink and downlink transmission.

For example, the first beam is a TCI-state for uplink transmission (which may be understood as that the first indication information indicates an index of the TCI-state for uplink transmission, or the first indication information includes the TCI-state for uplink transmission), the TCI-state includes one reference signal resource, and the terminal determines the uplink transmit beam (namely, the first beam) based on the reference signal resource. Specifically, if the reference signal resource is a downlink resource, the terminal uses a receive beam of the downlink resource as the uplink transmit beam (which may be understood as that the terminal device uses a transmit beam in a same direction as the receive beam of the downlink resource as the uplink transmit beam). If the reference signal resource is an uplink resource, the terminal uses a transmit beam of the uplink resource as the uplink transmit beam.

For another example, the first beam is a TCI-state for uplink and downlink transmission (which may be understood as that the first indication information indicates an index of the TCI-state for uplink and downlink transmission, or the first indication information includes the TCI-state for uplink and downlink transmission), the TCI-state includes one reference signal resource, and the terminal determines the uplink transmit beam and a downlink receive beam based on the reference signal resource. Specifically, if the reference signal resource is a downlink resource, the terminal uses a receive beam of the downlink resource as the downlink receive beam and the uplink transmit beam (which may be understood as that the terminal uses a transmit beam in a same direction as the receive beam of the downlink resource as the uplink transmit beam). If the reference signal resource is an uplink resource, the terminal uses a transmit beam of the uplink resource as the uplink transmit beam and the downlink receive beam (which may be understood as that the terminal uses a receive beam in a same direction as the transmit beam of the uplink resource as the downlink receive beam).

After the first indication information indicates the one or more first beams, the terminal device performs uplink timing adjustment and measures the path loss information for each first beam by using the following methods.

The timing measurement is implemented in the following manners:

In an implementation, the first beam is associated with one uplink resource, and the UE sends the uplink resource, so that the network device determines the uplink timing information corresponding to the first beam, where the uplink resource is sent over the first beam. The uplink resource may be a semi-persistent resource. When the first beam is not indicated, the uplink resource is in an inactive state. When the first beam is indicated, the uplink resource is automatically activated.

In another implementation, a configuration parameter corresponding to the first beam includes an uplink resource indicating the uplink transmit beam. For example, the configuration parameter corresponding to the first beam is included in one TCI-state, and the TCI-state includes the uplink resource indicating the uplink transmit beam. The terminal device sends the uplink resource to the network device, so that the network device determines the uplink timing information corresponding to the first beam, where the uplink resource is sent over the first beam. The uplink resource may be a semi-persistent resource. When the first beam is not indicated, the uplink resource is in an inactive state. When the first beam is indicated, the uplink resource is automatically activated.

The path loss measurement is implemented in the following manners:

In an implementation, the first beam is associated with one downlink resource, the UE measures the downlink resource to determine the path loss information, and the terminal receives the downlink resource in a beam direction that is the same as that of the first beam. The downlink resource may be a semi-persistent resource. When the first beam is not indicated, the downlink resource is in an inactive state. When the first beam is indicated, the downlink resource is automatically activated.

In another implementation, a configuration parameter corresponding to the first beam includes a downlink resource indicating the uplink transmit beam. For example, the configuration parameter corresponding to the first beam is included in one TCI-state, and the TCI-state includes the downlink resource indicating the uplink transmit beam. The terminal device measures the downlink resource to determine the path loss information, and receives the downlink resource over the first beam, that is, receives the downlink resource in a beam direction same as that of the first beam. The downlink resource may be a semi-persistent resource. When the first beam is not indicated, the downlink resource is in an inactive state. When the first beam is indicated, the downlink resource is automatically activated.

In this application, the terminal device may report, to the network device, whether the terminal device supports a capability of maintaining (measuring) the beam to be switched to (where the beam to be switched to may alternatively be replaced with a future beam or the first beam) before the beam switching. Maintenance (measurement) is measuring information such as timing, path loss, or a frequency offset of the future beam. Accordingly, the network device receives, from the terminal device, information indicating whether the terminal device supports the capability of maintaining the beam to be switched to before the beam switching. In this way, whether to send the first indication information to the terminal device is determined based on the capability of the terminal. In this way, the network device sends the first indication information to the terminal device in a targeted manner, to avoid a problem that after sending the first indication information, the terminal device does not have the capability of measuring the beam to be switched to before the beam switching, causing a waste of signaling overheads.

In the foregoing described solution, the first indication information indicates one beam to be switched to (the first beam), and then the second indication information for beam switching is sent, to implement the beam switching. In a solution described below, the network device sends first indication information to the terminal device, to indicate a first beam, and the network device may not send second indication information. Instead, the first indication information is considered as a pre-switchover command. Fourth duration is specified. The terminal device may perform beam switching at a moment that equals a fourth moment plus the specified fourth duration.

The terminal device performs the following operations:

The terminal device receives the first indication information from the network device, where the first indication information indicates the first beam.

The terminal device performs any one of behavior 1 to behavior 5 based on the first beam. For an execution process, refer to the foregoing described process. Details are not described again.

The terminal device performs beam switching based on the first beam at a fifth moment. Fifth moment=Fourth moment+Fourth duration.

The fourth moment may be a moment (which may be at a slot level or a symbol level) at which the first indication information is received, in other words, the terminal device starts timing (for example, timing by using a timer) after receiving the first indication information. Alternatively, the fourth moment is a moment at which ACK information for the first indication information is fed back, or the fourth moment is a moment that equals a moment at which ACK information for the first indication information is fed back plus a transmission delay.

The fourth duration may be determined by the network device and indicated to the terminal device. For example, the fourth duration is indicated in the first indication information, or is configured by using RRC. Alternatively, the fourth duration may be a value specified in a protocol. Alternatively, the fourth duration may be determined by the terminal device and reported to the network device, for example, may be reported to the network device via capability information.

When the beam switching is performed based on the first beam, if the first beam is a transmit beam on the network device side, the terminal device switches a transmit beam of the terminal device to a receive beam corresponding to the first beam; or if the first beam is a transmit beam on the terminal device side, the terminal device switches the transmit beam of the terminal device to the first beam.

The network device performs the following operations:

The network device sends the first indication information to the terminal device, where the first indication information indicates the first beam, and the first indication information indicates the terminal device to perform any one of behavior 1 to behavior 5 based on the first beam. For an execution process, refer to the foregoing described process. Details are not described again.

The network device performs beam switching based on the first beam at the fifth moment. Fifth moment=Fourth moment+Fourth duration. For the network device, the fourth moment may be a moment at which the first indication information is sent, or may be a moment that equals a moment at which the first indication information is sent plus a transmission delay, or may be a moment at which the ACK information for the first indication information is received.

When the beam switching is performed based on the first beam, if the first beam is a transmit beam on the network device side, the network device switches the transmit beam of the network device to the first beam; or if the first beam is a transmit beam on the terminal device side, the network device switches the transmit beam of the network device to a receive beam corresponding to the first beam.

The network device may send signaling to further prolong the fourth duration. For example, the signaling may be for clearing the timer or restarting timing. Alternatively, the network device may send signaling to stop the timer or indicate to invalidate one or more pieces of first indication information.

The network device predicts a beam that may be used in the future. Beams predicted at different time points may be the same or may be different. If the predicted beams are different, the network device may send the one or more pieces of first indication information to the terminal device, and first beams in all the first indication information are different. When the network device indicates a plurality of pieces of first indication information, fifth moments (effective moments) corresponding to the plurality of pieces of first indication information may be the same or different, and a fifth moment corresponding to first indication information that is sent by the network device first may be earlier than, later than, or equal to a fifth moment corresponding to first indication information that is sent later.

In addition, it is specified that if the previous first indication information takes effect (that is, the beam switching is performed based on the first beam indicated by the first indication information), all the subsequent first indication information is invalid. The subsequent first indication information refers to other first indication information whose effective time is later than the effective first indication information. Alternatively, if the previous first indication information takes effect, a timer of the subsequent first indication information is cleared, or a timer of the subsequent first indication information is restarted, or a timer of the subsequent first indication information continues for a period of time after a current time.

The foregoing describes the method in embodiments of this application, and the following describes apparatuses in embodiments of this application. The method and the apparatus are based on a same technical idea. The method and the apparatus have similar principles for resolving problems. Therefore, for implementations of the apparatus and the method, refer to each other. Repeated parts are not described again.

In embodiments of this application, the apparatus may be divided into functional modules based on the foregoing method examples. For example, each functional module may be obtained through division for each corresponding function, or two or more functions may be integrated into one module. The modules may be implemented in a form of hardware, or may be implemented in a form of a software functional module. It should be noted that, in embodiments of this application, module division is an example, and is merely a logical function division. During specific implementation, there may be another division manner.

Based on a same technical idea as the foregoing method, FIG. 6 is a schematic diagram of a structure of a beam switching apparatus 600 (where the beam switching apparatus may also be considered as a communication apparatus). The apparatus 600 may be a terminal device, or may be a chip or a functional unit used in the terminal device. The apparatus 600 has any function of the terminal device in the foregoing method. For example, the apparatus 600 can perform the steps performed by the terminal device in the method in FIG. 4.

The apparatus 600 may include a processing module 610, and optionally, further include a receiving module 620a, a sending module 620b, and a storage module 630. The processing module 610 may be connected to the storage module 630, the receiving module 620a, and the sending module 620b. The storage module 630 may also be connected to the receiving module 620a and the sending module 620b.

The receiving module 620a may perform a receiving action performed by the terminal device in the foregoing method embodiment.

The sending module 620b may perform a sending action performed by the terminal device in the foregoing method embodiment.

The processing module 610 may perform an action other than the sending action and the receiving action in the actions performed by the terminal device in the foregoing method embodiment.

In an example, the receiving module 620a is configured to receive first indication information from a network device, where the first indication information indicates a first beam.

The processing module 610 is configured to perform one or more of the following behaviors based on the first beam: measuring downlink time offset information corresponding to the first beam, measuring downlink frequency offset information corresponding to the first beam, measuring path loss information corresponding to the first beam, sending, over the first beam by using the sending module 620b, a signal for uplink timing measurement, and receiving uplink timing adjustment information from the network device by using the receiving module 620a, where the uplink timing adjustment information is determined based on the first beam.

The receiving module 620a is further configured to receive second indication information from the network device, where the second indication information indicates to switch to the first beam.

In an example, that the processing module 610 is configured to measure the downlink time offset information and/or the downlink frequency offset information corresponding to the first beam specifically includes: The processing module 610 is configured to measure, based on one or more first resources, the downlink time offset information and/or the downlink frequency offset information corresponding to the first beam, where the first resource and the first beam satisfy a quasi-colocation relationship of typeD, or the first resource and a quasi-colocation resource of typeD corresponding to the first beam satisfy a quasi-colocation relationship of typeD.

In an example, that the processing module 610 is configured to measure the path loss information corresponding to the first beam specifically includes: The processing module 610 is configured to measure, based on one or more second resources, the path loss information corresponding to the first beam, where the second resource and the first beam satisfy the quasi-colocation relationship of typeD, or the second resource and the quasi-colocation resource of typeD corresponding to the first beam satisfy the quasi-colocation relationship of typeD.

In an example, that the processing module 610 is configured to measure, based on a plurality of second resources, the path loss information corresponding to the first beam specifically includes: The processing module 610 is configured to: separately measure the path loss information corresponding to the first beam based on each second resource, to obtain a plurality of corresponding path loss information measurement results, and determine an average value of the plurality of path loss information measurement results; or separately measure the path loss information corresponding to the first beam based on each second resource, to obtain a plurality of corresponding path loss information measurement results, and perform filtering processing on the plurality of path loss information measurement results, to obtain one path loss information measurement result.

In an example, that the processing module 610 is configured to send, based on the first beam, the signal for uplink timing measurement specifically includes: The processing module 610 is configured to: send, over the first beam by using the sending module 620b, the signal for uplink timing measurement; or send, over a receive beam of the first beam by using the sending module 620b, the signal for uplink timing measurement.

In an example, that the processing module 610 is configured to perform the one or more behaviors based on the first beam specifically includes: The processing module 610 is configured to: at a first moment, start to perform the one or more behaviors based on the first beam, where the first moment is any one of the following: a moment at which the first indication information is received, a moment at which acknowledgement ACK information corresponding to the first indication information is fed back, a moment that equals the moment at which the first indication information is received plus a time interval, and a moment that equals the moment at which the ACK information corresponding to the first indication information is fed back plus a time interval.

In an example, the sending module 620b is configured to report, to the network device, whether the apparatus supports a capability of measuring a beam to be switched to before beam switching.

In an example, the storage module 630 may store computer-executable instructions in the method performed by the terminal device, to enable the processing module 610, the receiving module 620a, and the sending module 620b to perform the method performed by the terminal device in the foregoing example.

The receiving module 620a and the sending module 620b may be integrated together and defined as a transceiver module.

Based on a same technical idea as the foregoing method, FIG. 7 is a schematic diagram of a structure of a beam switching apparatus 700 (where the beam switching apparatus may also be considered as a communication apparatus). The apparatus 700 may be a network device, or may be a chip or a functional unit used in the network device. The apparatus 700 has any function of the network device in the foregoing method. For example, the apparatus 700 can perform the steps performed by the network device in the method in FIG. 4.

The apparatus 700 may include a processing module 710, and optionally, further include a receiving module 720a, a sending module 720b, and a storage module 730. The processing module 710 may be connected to the storage module 730, the receiving module 720a, and the sending module 720b. The storage module 730 may also be connected to the receiving module 720a and the sending module 720b.

The receiving module 720a may perform a receiving action performed by the network device in the foregoing method embodiment.

The sending module 720b may perform a sending action performed by the network device in the foregoing method embodiment.

The processing module 710 may perform an action other than the sending action and the receiving action in the actions performed by the network device in the foregoing method embodiment.

In an example, the processing module 710 is configured to generate first indication information. The sending module 720b is configured to: send the first indication information to a terminal device, where the first beam information indicates a first beam; the first indication information indicates the terminal device to perform one or more of the following behaviors based on the first beam: measuring downlink time offset information corresponding to the first beam, measuring downlink frequency offset information corresponding to the first beam, measuring path loss information corresponding to the first beam, sending, based on the first beam, a signal for uplink timing measurement, and receiving uplink timing adjustment information from the apparatus; and the uplink timing adjustment information is determined based on the first beam; and send second indication information to the terminal device, where the second indication information indicates to switch to the first beam.

In an example, the sending module 720b is configured to send information about one or more first resources to the terminal device, where the first resource is for measuring the downlink time offset information and/or the downlink frequency offset information corresponding to the first beam; and the first resource and the first beam satisfy a quasi-colocation relationship of typeD, or the first resource and a quasi-colocation resource of typeD corresponding to the first beam satisfy a quasi-colocation relationship of typeD.

In an example, the sending module 720b is configured to send information about one or more second resources to the terminal device, where the second resource is for measuring the path loss information corresponding to the first beam; and the second resource and the first beam satisfy the quasi-colocation relationship of typeD, or the second resource and the quasi-colocation resource of typeD corresponding to the first beam satisfy the quasi-colocation relationship of typeD.

In an example, the receiving module 720a is configured to receive, from the terminal device, information that is reported by the terminal device and that indicates whether the terminal device supports a capability of measuring a beam to be switched to before beam switching.

In an example, the storage module 730 may store computer-executable instructions in the method performed by the network device, to enable the processing module 710, the receiving module 720a, and the sending module 720b to perform the method performed by the network device in the foregoing example.

The receiving module 720a and the sending module 720b may be integrated together and defined as a transceiver module.

For example, the storage module may include one or more memories, and the memory may be a component configured to store a program or data in one or more devices or circuits. The storage module may be a register, a cache, a RAM, or the like. The storage module may be integrated with the processing module. The storage module may be a ROM or another type of static storage device that can store static information and instructions. The storage module may be independent of the processing module.

The transceiver module may be an input/output interface, a pin, a circuit, or the like.

The foregoing describes the apparatus used in the terminal device and the apparatus used in the network device in embodiments of this application. The following describes possible product forms of the apparatus used in the terminal device and the apparatus used in the network device. It should be understood that any form of product that has a feature of the apparatus used in the terminal device in FIG. 6 and any form of product that has a feature of the apparatus used in the network device in FIG. 7 fall within the protection scope of this application. It should be further understood that the following descriptions are merely examples, and a product form of the apparatus used in terminal device and a product form of the apparatus used in the network device in embodiments of this application are not limited thereto.

In a possible product form, the apparatus may be implemented by using a general bus architecture.

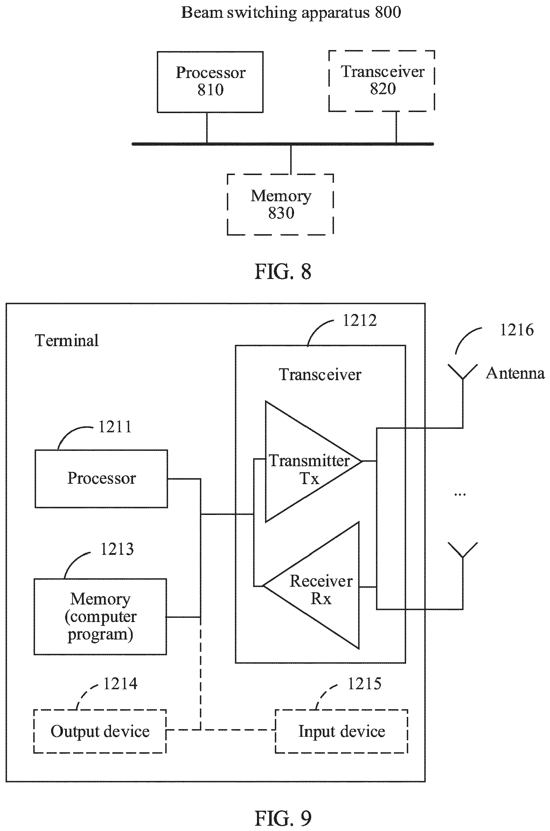

FIG. 8 is a schematic block diagram of a beam switching apparatus 800 (where the beam switching apparatus may also be considered as a communication apparatus). The apparatus 800 may be a terminal device, or may be a chip in the terminal device. It should be understood that the apparatus has any function of the terminal device in the foregoing method. For example, the apparatus 800 can perform the steps performed by the terminal device in the method in FIG. 4.

The apparatus 800 may include a processor 810, and optionally, further include a transceiver 820 and a memory 830. The transceiver 820 may be configured to receive a program or instructions and transmit the program or the instructions to the processor 810. Alternatively, the transceiver 820 may be configured to perform communication interaction between the apparatus 800 and another communication device, for example, exchange control signaling and/or service data. The transceiver 820 may be a code and/or data read/write transceiver, or the transceiver 820 may be a signal transmission transceiver between the processor and the transceiver. The processor 810 and the memory 830 are electrically coupled.

For example, the memory 830 is configured to store a computer program. The processor 810 may be configured to invoke the computer program or instructions stored in the memory 830 to perform the method performed by the terminal device in the foregoing example, or perform, by using the transceiver 820, the method performed by the terminal device in the foregoing example.

The processing module 610 in FIG. 6 may be implemented by using the processor 810.

The receiving module 620a and the sending module 620b in FIG. 6 may be implemented by using the transceiver 820. Alternatively, the transceiver 820 is divided into a receiver and a transmitter. The receiver performs a function of the receiving module, and the transmitter performs a function of the sending module.

The storage module 630 in FIG. 6 may be implemented by using the memory 830.

In addition, in a possible implementation, the apparatus used in the network device has a structure similar to that of the apparatus in FIG. 8, and may further include a processor. Optionally, the apparatus may further include a transceiver and a memory. The apparatus used in the second network device may be a network device, or may be a chip used in the network device. It should be understood that the apparatus has any function of the network device in the foregoing method. For example, the apparatus can perform the steps performed by the network device in the method in FIG. 4.

For example, the memory is configured to store a computer program. The processor may be configured to invoke the computer program or instructions stored in the memory, to perform the method performed by the network device in the foregoing example, or perform, by using the transceiver, the method performed by the network device in the foregoing example.

The processing module 710 in FIG. 7 may be implemented by using the processor.

The receiving module 720a and the sending module 720b in FIG. 7 may be implemented by using the transceiver. Alternatively, the transceiver is divided into a receiver and a transmitter. The receiver performs a function of the receiving module, and the transmitter performs a function of the sending module.

The storage module 730 in FIG. 7 may be implemented by using the memory.

In a possible product form, the apparatus may be implemented by a general-purpose processor (where the general-purpose processor may also be referred to as a chip or a chip system).

In a possible implementation, the general-purpose processor that implements the apparatus used in the terminal device includes a processing circuit (where the processing circuit may also be referred to as a processor), and optionally, further includes a storage medium (where the storage medium may also be referred to as a memory) and an input/output interface that is internally connected to and communicates with the processing circuit. The storage medium is configured to store instructions executed by the processing circuit, to perform the method performed by the terminal device in the foregoing example.

The processing module 610 in FIG. 6 may be implemented by using the processing circuit.

The receiving module 620a and the sending module 620b in FIG. 6 may be implemented by using the input/output interface. Alternatively, the input/output interface is divided into an input interface and an output interface. The input interface performs a function of the receiving module, and the output interface performs a function of the sending module.

The storage module 630 in FIG. 6 may be implemented by using the storage medium.

In a possible implementation, the general-purpose processor that implements the apparatus used in the network device includes a processing circuit (where the processing circuit may also be referred to as a processor), and optionally, further includes a storage medium (where the storage medium may also be referred to as a memory) and an input/output interface that is internally connected to and communicates with the processing circuit. The storage medium is configured to store instructions executed by the processing circuit, to perform the method performed by the network device in the foregoing example.

The processing module 710 in FIG. 7 may be implemented by using the processing circuit.

The receiving module 720a and the sending module 720b in FIG. 7 may be implemented by using the input/output interface. Alternatively, the input/output interface is divided into an input interface and an output interface. The input interface performs a function of the receiving module, and the output interface performs a function of the sending module.

The storage module 730 in FIG. 7 may be implemented by using the storage medium.

In a possible product form, the apparatus in this embodiment of this application may further be implemented by using the following components: one or more field-programmable gate arrays (FPGAs), a programmable logic device (PLD), a controller, a state machine, gate logic, a discrete hardware component, any other suitable circuit, or any combination of circuits that can perform various functions described in this application.

FIG. 9 is a schematic diagram of a structure of a terminal according to an embodiment of this application.

The terminal includes at least one processor 1211 and at least one transceiver 1212. In a possible example, the terminal may further include at least one memory 1213, an output device 1214, an input device 1215, and one or more antennas 1216. The processor 1211, the memory 1213, and the transceiver 1212 are connected. The antenna 1216 is connected to the transceiver 1212, and the output device 1214 and the input device 1215 are connected to the processor 1211.

The memory 1213 may exist independently, and is connected to the processor 1211. In another example, the memory 1213 may be integrated with the processor 1211, for example, be integrated into a chip. The memory 1213 can store program code for executing the technical solutions in embodiments of this application, and the processor 1211 controls the execution. Various types of executed computer program code may also be considered as drivers of the processor 1211. For example, the processor 1211 is configured to execute the computer program code stored in the memory 1213, to implement the technical solutions in embodiments of this application.

The transceiver 1212 may be configured to support receiving or sending of a radio frequency signal between terminals, between a terminal and a network device, or between a terminal and another device. The transceiver 1212 may be connected to the antenna 1216. The transceiver 1212 includes a transmitter Tx and a receiver Rx. Specifically, the one or more antennas 1216 may receive a radio frequency signal. The receiver Rx of the transceiver 1212 is configured to: receive the radio frequency signal from the antenna, convert the radio frequency signal into a digital baseband signal or a digital intermediate frequency signal, and provide the digital baseband signal or the digital intermediate frequency signal for the processor 1211, so that the processor 1211 further processes the digital baseband signal or the digital intermediate frequency signal, for example, performs demodulation processing and decoding processing. In addition, the transmitter Tx of the transceiver 1212 is further configured to: receive a modulated digital baseband signal or a modulated digital intermediate frequency signal from the processor 1211, convert the modulated digital baseband signal or the digital intermediate frequency signal into a radio frequency signal, and send the radio frequency signal through the one or more antennas 1216. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one or more levels of frequency up-mixing processing and digital-to-analog conversion processing on the modulated digital baseband signal or the modulated digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

The processor 1211 may be configured to implement various functions for the terminal, for example, configured to process a communication protocol and communication data, or configured to: control the entire terminal device, execute a software program, and process data of the software program, or configured to assist in completing a computing processing task, for example, graphics and image processing or audio processing. Alternatively, the processor 1211 is configured to implement one or more of the foregoing functions.

The output device 1214 communicates with the processor 1211, and may display information in a plurality of manners. For example, the output device 1214 may be a liquid crystal display (Liquid Crystal Display, LCD), a light emitting diode (Light Emitting Diode, LED) display device, a cathode ray tube (Cathode Ray Tube, CRT) display device, or a projector (projector). The input device 1215 communicates with the processor 1211, and may receive an input of a user in a plurality of manners. For example, the input device 1215 may be a mouse, a keyboard, a touchscreen device, or a sensing device.

In addition, a hardware structure of the network device is similar to a hardware structure of the terminal shown in FIG. 9. For example, the network device may include at least one processor and at least one transceiver. In a possible example, the network device may further include at least one memory and one or more antennas. In a possible example, the transceiver may include a transmitter Tx and a receiver Rx. The processor, the memory, and the transceiver are connected, and the antenna is connected to the transceiver. Each component may be configured to implement various functions for the network device. This is similar to a case in which each component is configured to implement various functions for the terminal in FIG. 8. Details are not described again.

An embodiment of this application further provides a computer-readable storage medium, storing a computer program. When the computer program is executed by a computer, the computer is enabled to perform the foregoing beam switching method. In other words, the computer program includes instructions for implementing the foregoing beam switching method.

An embodiment of this application further provides a computer program product, including computer program code. When the computer program code is run on a computer, the computer is enabled to perform the beam switching method provided above.

An embodiment of this application further provides a communication system. The communication system includes the terminal device and the network device that perform the foregoing beam switching method.

In addition, the processor mentioned in embodiments of this application may be a central processing unit (central processing unit, CPU) or a baseband processor. The baseband processor and the CPU may be integrated or separated, or may be a network processor (network processor, NP) or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

The memory mentioned in embodiments of this application may be a volatile memory or a non-volatile memory, or may include a volatile memory and a non-volatile memory. The nonvolatile memory may be a read-only memory (Read-Only Memory, ROM), a programmable read-only memory (programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example, and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application is intended to include but is not limited to these memories and any memory of another proper type.

The transceiver described in embodiments of this application may include an independent transmitter and/or an independent receiver, or the transmitter and the receiver may be integrated. The transceiver may operate according to an indication of a corresponding processor. Optionally, the transmitter may correspond to a transmitter machine in a physical device, and the receiver may correspond to a receiver machine in the physical device.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing described system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division. During specific implementation, there may be another division manner. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the conventional technology, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

The term "and/or" in this application describes an association relationship for describing associated objects and indicates that three relationships may exist. For example, A and/or B may indicate the following three cases: Only A exists, both A and B exist, and only B exists. The character "/" generally indicates an "or" relationship between the associated objects. "A plurality of" in this application means two or more. In addition, it should be understood that in description of this application, terms such as "first" and "second" are merely used for distinguishing and description, but should not be understood as indicating or implying relative importance, or should not be understood as indicating or implying a sequence.

This application is described with reference to the flowcharts and/or block diagrams of the method, the device (system), and the computer program product according to embodiments of this application. It should be understood that computer programs or instructions may be used to implement each procedure and/or each block in the flowcharts and/or the block diagrams and a combination of procedures and/or blocks in the flowcharts and/or the block diagrams. These computer programs or instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer programs or instructions may be stored in a computer-readable memory that can indicate the computer or the another programmable data processing device to work in a specific manner, so that the instructions stored in the computer-readable memory generate an artifact that includes an instruction apparatus. The instruction apparatus implements the specific function in one or more processes in the flowcharts and/or in one or more blocks in the block diagrams.

These computer programs or instructions may be loaded onto the computer or the another programmable data processing device, so that a series of operations and steps are performed on the computer or the another programmable device, thereby generating computer-implemented processing. Therefore, the instructions executed on the computer or the another programmable device provide a step for implementing the specific function in one or more processes in the flowcharts and/or in one or more blocks in the block diagrams.

Although preferred embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

Clearly, persons skilled in the art can make various modifications and variations to embodiments of this application without departing from the spirit and scope of embodiments of this application. In this way, this application is intended to cover these modifications and variations to embodiments of this application provided that they fall within the scope of protection defined by the following claims and their equivalent technologies of this application.

## Claims

1. A beam switching method, wherein the method comprises:
receiving first indication information from a network device, wherein the first indication information indicates a first beam;
performing one or more of the following behaviors based on the first beam: measuring downlink time offset information corresponding to the first beam, measuring downlink frequency offset information corresponding to the first beam, measuring path loss information corresponding to the first beam, sending, based on the first beam, a signal for uplink timing measurement, and receiving uplink timing adjustment information from the network device, wherein the uplink timing adjustment information is determined based on the first beam; and
receiving second indication information from the network device, wherein the second indication information indicates to switch to the first beam.

2. The method according to claim 1, wherein the measuring the downlink time offset information and/or the downlink frequency offset information corresponding to the first beam comprises:
measuring, based on one or more first resources, the downlink time offset information and/or the downlink frequency offset information corresponding to the first beam, wherein
the first resource and the first beam satisfy a quasi-colocation relationship of typeD, or the first resource and a quasi-colocation resource of typeD corresponding to the first beam satisfy a quasi-colocation relationship of typeD.

3. The method according to claim 1 or 2, wherein the first resource is a quasi-colocation resource of typeA, typeB, or typeC corresponding to the first beam.

4. The method according to claim 2 or 3, wherein the measuring path loss information corresponding to the first beam comprises:
measuring, based on one or more second resources, the path loss information corresponding to the first beam, wherein
the second resource and the first beam satisfy the quasi-colocation relationship of typeD, or the second resource and the quasi-colocation resource of typeD corresponding to the first beam satisfy the quasi-colocation relationship of typeD.

5. The method according to claim 4, wherein the second resource is comprised in the first resource.

6. The method according to claim 4 or 5, wherein the measuring, based on a plurality of second resources, the path loss information corresponding to the first beam comprises:
separately measuring the path loss information corresponding to the first beam based on each second resource, to obtain a plurality of corresponding path loss information measurement results, and determining an average value of the plurality of path loss information measurement results; or
separately measuring the path loss information corresponding to the first beam based on each second resource, to obtain a plurality of corresponding path loss information measurement results, and perform filtering processing on the plurality of path loss information measurement results, to obtain one path loss information measurement result.

7. The method according to any one of claims 2 to 6, wherein the first indication information is further for activating the first resource and/or the second resource.

8. The method according to claim 1, wherein the sending, based on the first beam, a signal for uplink timing measurement comprises:
sending, over the first beam, the signal for uplink timing measurement; or
sending, over a receive beam of the first beam, the signal for uplink timing measurement.

9. The method according to any one of claims 1 to 8, wherein the performing the one or more behaviors based on the first beam comprises:
at a first moment, starting to perform the one or more behaviors based on the first beam, wherein
the first moment is any one of the following: a moment at which the first indication information is received, a moment at which acknowledgement ACK information corresponding to the first indication information is fed back, a moment that equals the moment at which the first indication information is received plus a time interval, and a moment that equals the moment at which the ACK information corresponding to the first indication information is fed back plus a time interval.

10. The method according to any one of claims 1 to 9, wherein second duration is greater than or equal to first duration, the second duration is duration of an interval between a moment at which the second indication information is received and the moment at which the first indication information is received, and the first duration is for completing performing the one or more behaviors based on the first beam.

11. The method according to any one of claims 1 to 10, wherein the method further comprises:
reporting, to the network device, whether a terminal device supports a capability of measuring a beam to be switched to before beam switching.

12. A beam switching method, wherein the method comprises:
sending first indication information to a terminal device, wherein the first beam information indicates a first beam, and the first indication information indicates the terminal device to perform one or more of the following behaviors based on the first beam: measuring downlink time offset information corresponding to the first beam, measuring downlink frequency offset information corresponding to the first beam, measuring path loss information corresponding to the first beam, sending, based on the first beam, a signal for uplink timing measurement, and receiving uplink timing adjustment information from a network device, wherein the uplink timing adjustment information is determined based on the first beam; and
sending second indication information to the terminal device, wherein the second indication information indicates to switch to the first beam.

13. The method according to claim 12, wherein the method further comprises:
sending information about one or more first resources to the terminal device, wherein the first resource is for measuring the downlink time offset information and/or the downlink frequency offset information corresponding to the first beam; and
the first resource and the first beam satisfy a quasi-colocation relationship of typeD, or the first resource and a quasi-colocation resource of typeD corresponding to the first beam satisfy a quasi-colocation relationship of typeD.

14. The method according to claim 12 or 13, wherein the first resource is a quasi-colocation resource of typeA, typeB, or typeC corresponding to the first beam.

15. The method according to claim 13 or 14, wherein the method further comprises:
sending information about one or more second resources to the terminal device, wherein the second resource is for measuring the path loss information corresponding to the first beam; and
the second resource and the first beam satisfy the quasi-colocation relationship of typeD, or the second resource and the quasi-colocation resource of typeD corresponding to the first beam satisfy the quasi-colocation relationship of typeD.

16. The method according to claim 15, wherein the second resource is comprised in the first resource.

17. The method according to any one of claims 13 to 16, wherein the first indication information is further for activating the first resource and/or the second resource.

18. The method according to any one of claims 12 to 17, wherein second duration is greater than or equal to first duration, the second duration is duration of an interval between a moment at which the second indication information is sent and a moment at which the first indication information is sent, and the first duration is used by the terminal device to complete performing the one or more behaviors based on the first beam.

19. The method according to any one of claims 12 to 18, wherein the method further comprises:
receiving, from the terminal device, information that is reported by the terminal device and that indicates whether the terminal device supports a capability of measuring a beam to be switched to before beam switching.

20. A beam switching apparatus, wherein the apparatus comprises:
a receiving module, configured to receive first indication information from a network device, wherein the first indication information indicates a first beam; and
a processing module, configured to perform one or more of the following behaviors based on the first beam: measuring downlink time offset information corresponding to the first beam, measuring downlink frequency offset information corresponding to the first beam, measuring path loss information corresponding to the first beam, sending, based on the first beam through a sending module, a signal for uplink timing measurement, and receiving uplink timing adjustment information from the network device through the receiving module, wherein the uplink timing adjustment information is determined based on the first beam, wherein
the receiving module is further configured to receive second indication information from the network device, wherein the second indication information indicates to switch to the first beam.

21. The apparatus according to claim 20, wherein that the processing module is configured to measure the downlink time offset information and/or the downlink frequency offset information corresponding to the first beam specifically comprises:
the processing module is configured to measure, based on one or more first resources, the downlink time offset information and/or the downlink frequency offset information corresponding to the first beam, wherein the first resource and the first beam satisfy a quasi-colocation relationship of typeD, or the first resource and a quasi-colocation resource of typeD corresponding to the first beam satisfy a quasi-colocation relationship of typeD.

22. The apparatus according to claim 20 or 21, wherein the first resource is a quasi-colocation resource of typeA, typeB, or typeC corresponding to the first beam.

23. The apparatus according to claim 21 or 22, wherein that the processing module is configured to measure the path loss information corresponding to the first beam specifically comprises:
the processing module is configured to measure, based on one or more second resources, the path loss information corresponding to the first beam, wherein the second resource and the first beam satisfy the quasi-colocation relationship of typeD, or the second resource and the quasi-colocation resource of typeD corresponding to the first beam satisfy the quasi-colocation relationship of typeD.

24. The apparatus according to claim 23, wherein the second resource is comprised in the first resource.

25. The apparatus according to claim 23 or 24, wherein that the processing module is configured to measure the path loss information corresponding to the first beam based on a plurality of second resources specifically comprises:
the processing module is configured to: separately measure the path loss information corresponding to the first beam based on each second resource, to obtain a plurality of corresponding path loss information measurement results, and determine an average value of the plurality of path loss information measurement results; or separately measure the path loss information corresponding to the first beam based on each second resource, to obtain a plurality of corresponding path loss information measurement results, and perform filtering processing on the plurality of path loss information measurement results, to obtain one path loss information measurement result.

26. The apparatus according to any one of claims 21 to 25, wherein the first indication information is further for activating the first resource and/or the second resource.

27. The apparatus according to claim 20, wherein that the processing module is configured to send, based on the first beam, the signal for uplink timing measurement specifically comprises:
the processing module is configured to: send, over the first beam by using the sending module, the signal for uplink timing measurement; or
send, over a receive beam of the first beam by using the sending module, the signal for uplink timing measurement.

28. The apparatus according to any one of claims 20 to 27, wherein that the processing module is configured to perform the one or more behaviors based on the first beam specifically comprises:
the processing module is configured to: at a first moment, start to perform the one or more behaviors based on the first beam, wherein the first moment is any one of the following: a moment at which the first indication information is received, a moment at which acknowledgement ACK information corresponding to the first indication information is fed back, a moment that equals the moment at which the first indication information is received plus a time interval, and a moment that equals the moment at which the ACK information corresponding to the first indication information is fed back plus a time interval.

29. The apparatus according to any one of claims 20 to 28, wherein second duration is greater than or equal to first duration, the second duration is duration of an interval between a moment at which the second indication information is received and the moment at which the first indication information is received, and the first duration is for completing performing the one or more behaviors based on the first beam.

30. The apparatus according to any one of claims 20 to 29, wherein the apparatus further comprises:
the sending module, configured to report, to the network device, whether the apparatus supports a capability of measuring a beam to be switched to before beam switching.

31. A beam switching apparatus, wherein the apparatus comprises:
a processing module, configured to generate first indication information; and
a sending module, configured to: send the first indication information to a terminal device, wherein the first beam information indicates a first beam, and the first indication information indicates the terminal device to perform one or more of the following behaviors based on the first beam: measuring downlink time offset information corresponding to the first beam, measuring downlink frequency offset information corresponding to the first beam, measuring path loss information corresponding to the first beam, sending, based on the first beam, a signal for uplink timing measurement, and receiving uplink timing adjustment information from the apparatus, wherein the uplink timing adjustment information is determined based on the first beam; and send second indication information to the terminal device, wherein the second indication information indicates to switch to the first beam.

32. The apparatus according to claim 31, wherein the sending module is configured to send information about one or more first resources to the terminal device, wherein the first resource is for measuring the downlink time offset information and/or the downlink frequency offset information corresponding to the first beam; and the first resource and the first beam satisfy a quasi-colocation relationship of typeD, or the first resource and a quasi-colocation resource of typeD corresponding to the first beam satisfy a quasi-colocation relationship of typeD.

33. The apparatus according to claim 31 or 32, wherein the first resource is a quasi-colocation resource of typeA, typeB, or typeC corresponding to the first beam.

34. The apparatus according to claim 32 or 33, wherein the sending module is configured to send information about one or more second resources to the terminal device, wherein the second resource is for measuring the path loss information corresponding to the first beam; and the second resource and the first beam satisfy the quasi-colocation relationship of typeD, or the second resource and the quasi-colocation resource of typeD corresponding to the first beam satisfy the quasi-colocation relationship of typeD.

35. The apparatus according to claim 34, wherein the second resource is comprised in the first resource.

36. The apparatus according to any one of claims 33 to 35, wherein the first indication information is further for activating the first resource and/or the second resource.

37. The apparatus according to any one of claims 32 to 36, wherein second duration is greater than or equal to first duration, the second duration is duration of an interval between a moment at which the second indication information is sent and a moment at which the first indication information is sent, and the first duration is used by the terminal device to complete performing the one or more behaviors based on the first beam.

38. The apparatus according to any one of claims 32 to 37, wherein the apparatus further comprises:
a receiving module, configured to receive, from the terminal device, information that is reported by the terminal device and that indicates whether the terminal device supports a capability of measuring a beam to be switched to before beam switching.

39. A communication apparatus, comprising a processor and a memory, wherein
the memory is configured to store computer programs or instructions; and
the processor is configured to: execute a part or all of the computer programs or instructions in the memory, and implement the method according to any one of claims 1 to 19 when the part or all of the computer programs or instructions are executed.

40. A communication apparatus, comprising a processor, wherein the processor is coupled to a memory; and
the processor is configured to: execute a part or all of computer programs or instructions in the memory, and implement the method according to any one of claims 1 to 19 when the part or all of the computer programs or instructions are executed.

41. A chip system, wherein the chip system comprises a processing circuit; the processing circuit is coupled to a storage medium; and
the processing circuit is configured to: execute a part or all of computer programs or instructions in the storage medium, and implement the method according to any one of claims 1 to 19 when the part or all of the computer programs or instructions are executed.

42. A computer-readable storage medium, configured to store a computer program, wherein the computer program comprises instructions for implementing the method according to any one of claims 1 to 19.

43. A computer program product, comprising computer program code, wherein when the computer program code is run on a computer, the computer is enabled to perform the method according to any one of claims 1 to 19.
